# EUROPEAN PATENT SPECIFICATION

(11) **EP 4 580 169 B1**
(45) Date of publication and mention of the grant of the patent: **02.12.2026**
(21) Application number: 24794324.4
(22) Date of filing: 25.10.2024
(51) Int. Cl.: H04M 1/02, H04M 1/03, H04M 1/60

(54) **ELECTRONIC DEVICE COMPRISING SPEAKER**
ELEKTRONISCHE VORRICHTUNG MIT LAUTSPRECHER
DISPOSITIF ÉLECTRONIQUE COMPRENANT UN HAUT-PARLEUR

(30) Priority: 31.10.2023 KR 20230148228; 09.01.2024 KR 20240003840
(43) Date of publication of application: 02.07.2025
(73) Proprietor: Samsung Electronics Co., Ltd, Suwon-si, Gyeonggi-do 16677 (KR)
(72) Inventor: Sim, Myoungsung, Suwon-si, Gyeonggi-do 16677 (KR); Park, Youngbae, Suwon-si, Gyeonggi-do 16677 (KR); Kim, Choonho, Suwon-si, Gyeonggi-do 16677 (KR); Kim, Taeeon, Suwon-si, Gyeonggi-do 16677 (KR); Cho, Woojin, Suwon-si, Gyeonggi-do 16677 (KR); Heo, Seungyoon, Suwon-si, Gyeonggi-do 16677 (KR); Cho, Joonrae, Suwon-si, Gyeonggi-do 16677 (KR)
(74) Representative: Gulde & Partner
(86) International application number: PCT/KR2024/016436
(87) International publication number: WO 2025/095480

(56) References cited:
- CN-U- 218 336 091
- KR-A- 20180 040 797
- KR-A- 20210 099 971
- KR-A- 20220 112 482
- KR-A- 20230 026 225

## Description

### [Technical Field]

The disclosure relates to an electronic device including a speaker, e.g., a foldable electronic device including a speaker.

### [Background Art]

Advancing information communication and semiconductor technologies accelerate the spread and use of various electronic devices. Recent electronic devices are being developed to carry out communication while carried on.

The term "electronic device" may mean a device performing a particular function according to its equipped program, such as a home appliance, an electronic scheduler, a portable multimedia player, a mobile communication terminal, a tablet PC, a video/sound device, a desktop PC or laptop computer, a navigation for automobile, etc. For example, the electronic devices may output stored information as voices or images.

As electronic devices are highly integrated, and high-speed, high-volume wireless communication becomes commonplace, an electronic device, such as a mobile communication terminal, is recently being equipped with various functions. For example, an electronic device comes with the integrated functionality, including an entertainment function, such as playing video games, a multimedia function, such as replaying music/videos, a communication and security function, such as for mobile banking, and a scheduling or e-wallet function. These electronic devices have been downsized to be conveniently carried by users.

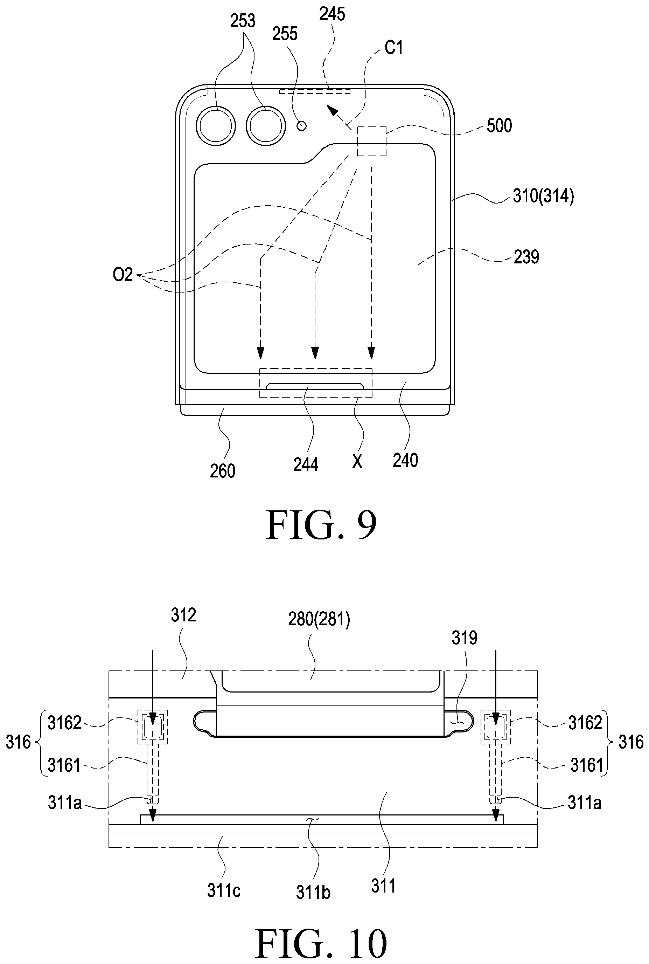

A prior art of KR 2022 0112482 A relates to a first speaker hole (452) that is covered by a damper structure (490) when the device is in a folded state to inhibit sound leakage (referencing Fig. 9 [0100 to 0102] of the EP family member).

Another publication of KR 2023 0026225 A relates to a foldable electronic device with first and second housings, a hinge structure, and a first speaker module. It teaches a sound path through a first through-hole (810) in the hinge cover. This path is configured to be open when the device is in a folded state and becomes selectively closed when the device is in an unfolded state.

### [Disclosure of Invention]

### [Solution to Problems]

An electronic device according is provided as per the appended claims.

### [Brief Description of Drawings]

FIG. 1 is a block diagram illustrating an electronic device in a network environment according to an embodiment;
FIG. 2 is a front view, side view, and rear view illustrating an electronic device in an unfolded state according to an embodiment of the disclosure;
FIG. 3 is a front view, side view, and rear view illustrating an electronic device in a folded state according to an embodiment of the disclosure;
FIG. 4 is an exploded perspective view illustrating an electronic device in an unfolded state according to an embodiment of the disclosure;
FIG. 5 is a cross-sectional view illustrating an electronic device in a folded state according to an embodiment of the disclosure;
FIG. 6 is an enlarged view illustrating a portion of FIG. 5;
FIG. 7 is a perspective view illustrating a diaphragm of a speaker according to an embodiment of the disclosure;
FIG. 8 is a perspective view illustrating a vent portion of a speaker according to an embodiment of the disclosure;
FIG. 9 illustrates propagating paths of a sound generated from a speaker in a folded state of an electronic device according to an embodiment of the disclosure;
FIG. 10 is an enlarged view illustrating a portion of FIG. 9, with the back cover removed;
FIG. 11 is a rear view illustrating a portion of a housing according to an embodiment of the disclosure;
FIG. 12 is a cross-sectional view illustrating a housing taken along line A-A' of FIG. 11;
FIG. 13 is a cross-sectional view illustrating an electronic device in a folded state according to an embodiment of the disclosure;
FIG. 14 is an enlarged view illustrating a portion of FIG. 13;
FIG. 15 illustrates propagating paths of a sound generated from a speaker in a folded state of an electronic device according to an embodiment of the disclosure;
FIG. 16 illustrates an example in which calling is performed in a folded state of an electronic device according to an embodiment of the disclosure;
FIG. 17 is a cross-sectional view illustrating an electronic device in an unfolded state according to an embodiment of the disclosure;
FIG. 18 is an enlarged view illustrating a portion of FIG. 17;
FIG. 19 illustrates an example in which calling is performed in an unfolded state of an electronic device according to an embodiment of the disclosure;
FIG. 20 is a cross-sectional view illustrating an electronic device in a partially folded state according to an embodiment of the disclosure;
FIG. 21 is an enlarged view illustrating a portion of FIG. 20;
FIG. 22 illustrates an example in which calling is performed in a partially folded state of an electronic device according to an embodiment of the disclosure;
FIG. 23 is a perspective view illustrating an electronic device in a folded state according to an embodiment of the disclosure;
FIG. 24 is a cross-sectional view illustrating a portion of an electronic device according to an embodiment of the disclosure;
FIG. 25 is a rear view illustrating an electronic device in a folded state according to an embodiment of the disclosure;
FIG. 26 is a cross-sectional view illustrating a portion of an electronic device, taken along line B-B' of FIG. 25;
FIG. 27 is a cross-sectional view illustrating a portion of an electronic device, taken along line B-B' of FIG. 25; and
FIG. 28 is a cross-sectional view illustrating a portion of an electronic device, taken along line B-B' of FIG. 25.

### [Mode for the Invention]

The following description taken in conjunction with the accompanying drawings may provide an understanding of various exemplary implementations of the disclosure, including claims. Further, descriptions of well-known functions and configurations may be omitted for clarity and brevity.

The terms and words used in the following description and claims are not limited to the bibliographical meaning, but may be used to clearly and consistently describe an embodiment of the disclosure. Therefore, it will be apparent to those skilled in the art that the following description of various implementations of the disclosure is provided only for the purpose of description, not for the purpose of limiting the disclosure defined as the scope of the claims and equivalent thereto.

The singular forms "a," "an," and "the" are intended to include the plural forms as well, unless the context clearly indicates otherwise. Thus, as an example, "a component surface" may be interpreted as including one or more of the surfaces of a component.

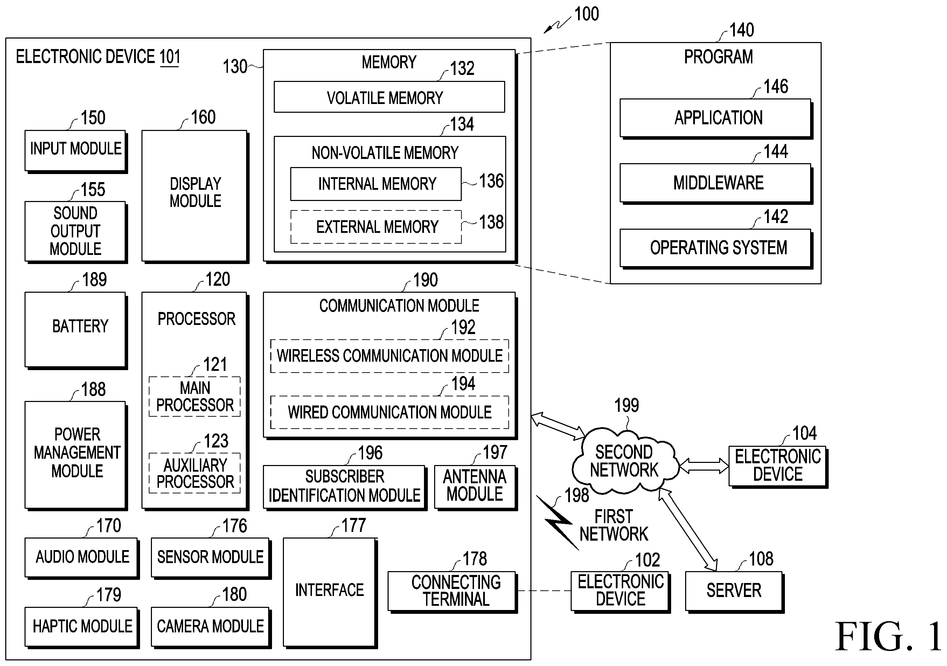

A person skilled in the art will recognize that one or more embodiments described with reference to Figs 1 to 28 may be combined to form a new embodiment. Also, parts of such embodiments may be combined correspondingly.

FIG. 1 is a block diagram illustrating an electronic device 101 in a network environment 100 according to various embodiments.

Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as BluetoothTM, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play StoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

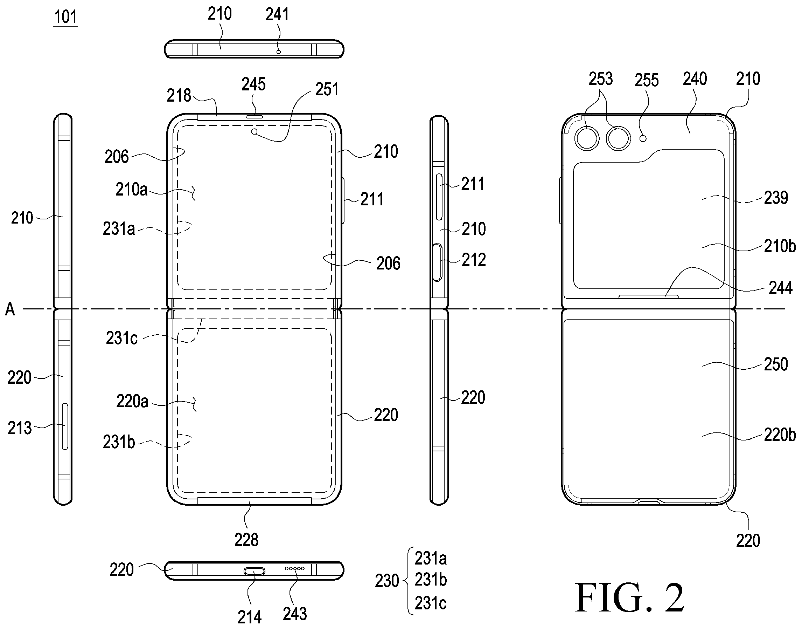

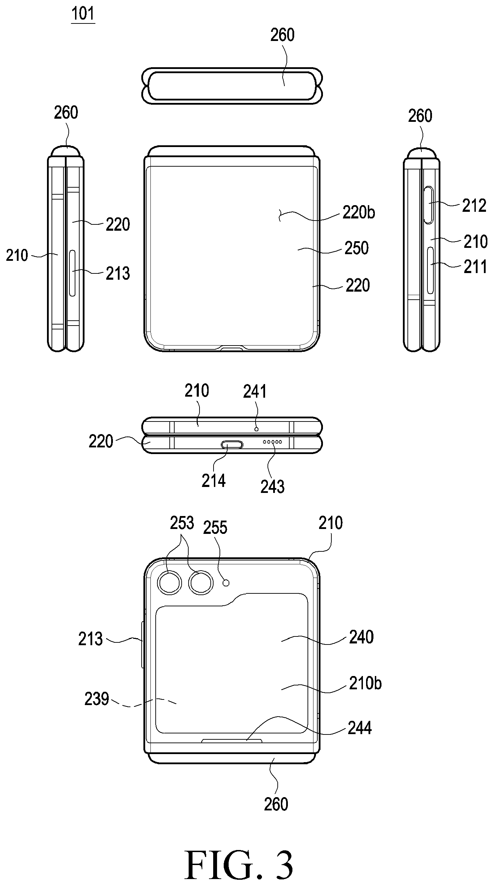

FIG. 2 is a front view, side view, and rear view illustrating an electronic device 101 in an unfolded state according to an embodiment of the disclosure. FIG. 3 is a front view, side view, and rear view illustrating an electronic device 101 in a folded state according to an embodiment of the disclosure.

Referring to FIGS. 2 and 3, an electronic device 101 according to an embodiment includes a first housing 210, a second housing 220, a flexible or foldable display 230 (hereinafter, simply a "first display 230") (e.g., the display module 160 of FIG. 1) disposed on the first housing 210 and the second housing 220, and a hinge cover 260.

According to an embodiment, the surface on which the first display 230 is disposed may be defined as a front surface of the electronic device 101. At least a portion of the front surface of the electronic device 101 may be formed of a substantially transparent front plate (e.g., a glass plate or polymer plate including various coat layers). The opposite surface of the front surface may be defined as a rear surface of the electronic device 101. The rear surface of the electronic device 101 may be formed by a substantially opaque rear plate (hereinafter, referred to as a 'back cover'). The back cover may be formed of, e.g., laminated or colored glass, ceramic, polymer, metal (e.g., aluminum, stainless steel (STS), or magnesium), or a combination of at least two thereof. The surface surrounding the space between the front and back surfaces may be defined as a side surface of the electronic device 101. The side surface may be formed by a side bezel structure (or a "side member") that couples to the front plate and the rear plate and includes a metal and/or polymer. According to an embodiment, the back cover and the side bezel plate may be integrally formed together and include the same material (e.g., a metal, such as aluminum).

The electronic device 101 may include at least one or more of a first display 230, audio modules 241, 243, and 245, a sensor module 255, camera modules 251 and 253, key input devices 211, 212, and 213, and a connector hole 214. According to an embodiment, the electronic device 101 may omit at least one (e.g., the key input devices 211, 212, and 213) of the components or additionally include another component (e.g., a light emitting device).

According to an embodiment of the disclosure, the first display 230 may be a display having at least a partial area transformable to be flat or curved. According to an embodiment, the first display 230 may include a folding area 231c, a first area 231a disposed on one side of the folding area 203 (e.g., an upper side of the folding area 231c of FIG. 2), and a second area 231b disposed on the opposite side of the folding area 231c (e.g., a lower side of the folding area 231c of FIG. 2). However, the segmentation of the first display 230 as shown in FIG. 2 is merely an example, and the first display 230 may be divided into a plurality of (e.g., four or more, or two) areas depending on the structure or function. For example, in the embodiment illustrated in FIG. 2, the first display 230 may be divided into the areas by the folding area 231c or folding axis A but, in another embodiment, the first display 230 may be divided into the areas with respect to another folding area 231c or another folding axis (e.g., a folding axis perpendicular to the folding axis A).

According to an embodiment of the disclosure, the microphone hole 241 may have a microphone inside to obtain external sounds. According to an embodiment, there may be a plurality of microphones to be able to detect the direction of a sound.

According to an embodiment of the disclosure, the speaker holes 243 and 245 may include an external speaker hole 243 and a phone receiver hole 245. According to an embodiment, the speaker holes 243 and 245 and the microphone hole 241 may be implemented as a single hole, or speakers may be rested without the speaker holes 243 and 245 (e.g., piezo speakers). Various changes may be made to the position and number of microphone holes 241 and speaker holes 243 and 245 according to an embodiment.

According to an embodiment of the disclosure, the camera modules 251 and 253 may include a first camera device 251 disposed on a first surface 210a of the first housing 210 of the electronic device 101 and a second camera device 253 disposed on a second surface 210b. The electronic device 101 may further include a flash (not shown). The camera devices 251 and 253 may include one or more lenses, an image sensor, and/or an image signal processor. The flash (not shown) may include, e.g., a light emitting diode (LED) or a xenon lamp.

According to an embodiment of the disclosure, the sensor module 255 may generate an electrical signal or data value corresponding to an internal operating state or external environmental state of the electronic device 101. Although not shown in the drawings, the electronic device 101 may additionally or alternatively include a sensor module (e.g., the sensor module 176 of FIG. 1) other than the sensor module 255 provided on the second surface 210b of the first housing 210. The electronic device 101 may include, as the sensor module, at least one of a proximity sensor, a fingerprint sensor, an HRM sensor, a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, or an illuminance sensor.

According to an embodiment of the disclosure, the key input devices 211, 212, and 213 may be disposed on a side surface of the foldable housing (e.g., the hinge cover 260, the first housing 210 and/or the second housing 220). According to another embodiment, the electronic device 101 may exclude all or some of the above-mentioned key input devices 211, 212, and 213 and the excluded key input devices may be implemented in other forms, e.g., as soft keys, on the first display 230. In an embodiment, the key input device may be configured to implement key input by a sensor module (e.g., a gesture sensor).

According to an embodiment of the disclosure, the connector hole 214 may be configured to receive a connector (e.g., a USB connector) for transmitting/receiving power and/or data to/from an external electronic device or, additionally or alternatively, a connector for transmitting/receiving audio signals to/from an external electronic device.

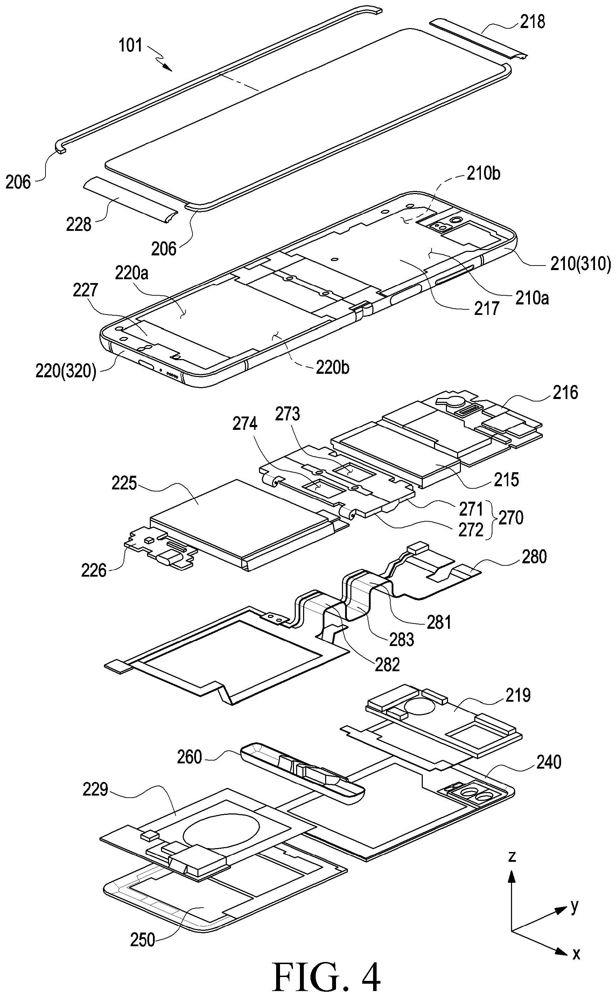

According to an embodiment of the disclosure, a foldable housing may be implemented by a combination of the first housing 210, the second housing 220, the first back cover 240, the second back cover 250, and/or the hinge module (e.g., the hinge structure 270 of FIG. 4). The foldable housing of the electronic device 101 are not limited to the shape and coupling shown but may rather be implemented in other shapes or via a combination and/or coupling of other components. For example, in another embodiment, the first housing 210 and the first back cover 240 may be integrally formed with each other, and the second housing 220 and the second back cover 250 may be integrally formed with each other. According to an embodiment of the disclosure, 'housing' may mean a combination of other various components not mentioned and/or a combined configuration thereof. For example, it may be described that a first area 231a of the first display 230 forms one surface of the first housing 210 and, in another embodiment, the first area 231a of the first display 230 is disposed or attached to one surface of the first housing 210.

According to an embodiment of the disclosure, the first housing 210 may be connected to the hinge structure (e.g., the hinge structure 270 of FIG. 4 described below) and may include a first surface 210a facing in a first direction and a second surface 210b facing in a second direction opposite to the first direction. The second housing 220 may be connected to the hinge structure (e.g., the hinge structure 270 of FIG. 4 described below) and may include a third surface 220a facing in a third direction and a fourth surface 220b facing in a fourth direction opposite to the third direction and may be rotated or pivoted from the first housing 210 about the hinge structure (or folding axis A).

According to an embodiment of the disclosure, the first housing 210 and the second housing 220 may be disposed on two opposite sides (or upper/lower sides) of the folding axis A. The angle or distance between the first housing 210 and the second housing 220 may be varied depending on whether the electronic device 101 is in the unfolded state, the folded state, or the partially unfolded (or partially folded) intermediate state.

According to an embodiment of the disclosure, the first housing 210 and the second housing 220 may at least partially be formed of a metal or non-metallic material with a rigidity selected to support the first display 230. The at least a portion formed of the metal material may be provided as a ground plane or radiating conductor of the electronic device 101 and, if provided as the ground plane, it may be electrically connected with a ground line formed on the printed circuit board (e.g., the printed circuit board 216 or 226 of FIG. 4).

According to an embodiment of the disclosure, the first back cover 240 may be disposed on one side (e.g., the upper side in FIG. 2) of the folding axis A, on the rear surface of the electronic device 101, e.g., it may have a substantially rectangular periphery which may be surrounded by the first housing 210 (and/or the side bezel structure). Similarly, the second back cover 250 may be disposed on the opposite side (e.g., the lower side in FIG. 2) of the folding axis A on the rear surface of the electronic device 101 and its periphery may be surrounded by the second housing 220 (and/or the side bezel structure).

According to an embodiment of the disclosure, the first back cover 240 and the second back cover 250 may be substantially symmetrical in shape with respect to the folding axis A. However, the first back cover 240 and the second back cover 250 are not necessarily symmetrical in shape. In another embodiment, the electronic device 101 may include the first back cover 240 and the second back cover 250 in various shapes. In another embodiment, the first back cover 240 may be integrally formed with the first housing 210, and the second back cover 250 may be integrally formed with the second housing 220.

According to an embodiment of the disclosure, the first back cover 240, the second back cover 250, the first housing 210, and the second housing 220 may form a space where various components (e.g., the printed circuit boards 216 and 226 or batteries 215 and 225 of FIG. 4) of the electronic device 101 may be disposed. According to an embodiment, one or more components may be arranged or visually exposed on/through the rear surface of the electronic device 101. For example, at least a portion of a second display 239 may be visually exposed through the first back cover 240. In another embodiment, one or more components or sensors may be visually exposed through the first back cover 240. According to various embodiments, the components or sensors may include a proximity sensor, a rear camera, and/or a flash. Although not separately shown in the drawings, one or more other components or sensors may be visually exposed through the second back cover 250.

According to an embodiment of the disclosure, the first back cover 240 may include a notch 244. The notch 244 may be formed in the edge of the first back cover 240. For example, the notch 244 may be positioned around the second display 239. For example, the notch 244 may extend along an edge of the second display 239. The notch 244 is described below in detail.

According to an embodiment of the disclosure, the front camera device 251 exposed to the front surface of the electronic device 101 through one or more openings or the rear camera 253 exposed through the first back cover 240 may include one or more lenses, an image sensor, and/or an image signal processor. The flash (not shown) may include, e.g., a light emitting diode (LED) or a xenon lamp. In an embodiment, two or more lenses (infrared camera, wide-angle and telephoto lens) and image sensors may be disposed on one surface of the electronic device 101.

According to an embodiment of the disclosure, the foldable housing 210, 220, and 260 may include a hinge cover 260, a first housing 210, and a second housing 220. The first housing 210 and the second housing 220 may be rotated with respect to the hinge structure 270. When the electronic device 101 switches from the unfolded state to the folded state, the first housing 210 and the second housing 220 may rotate with respect to the hinge structure 270 to be close to each other. When the electronic device 101 switches from the folded state to the unfolded state, a portion of the first housing 210 and a portion of the second housing 220 may rotate with respect to the hinge cover 260 so as to move away from each other. According to an embodiment of the disclosure, the folding direction of the first housing 210 and/or the second housing 220 may include a direction in which the first housing 210 and/or the second housing 220 is rotated with respect to the hinge structure 270 when the first housing 210 and/or the second housing 220 is switched from the unfolded state to the folded state. The unfolding direction of the first housing 210 and/or the second housing 220 may include a direction in which the first housing 210 and/or the second housing 220 is rotated with respect to the hinge structure 270 when the first housing 210 and/or the second housing 220 is switched from the folded state to the unfolded state.

According to an embodiment of the disclosure, the electronic device 101 may be changed to a folded state of the first display 230 or an unfolded state of the first display 230. For example, the first housing 210 and the second housing 220 may rotate about the folding axis A between the folded state in which the first area 231a and the second area 231b of the first display 230 face each other and a state (e.g., the unfolded state of the electronic device 101 illustrated in FIG. 2) unfolded from the folded state by a designated angle.

According to an embodiment of the disclosure, as the first housing 210 and the second housing 220 rotate about the folding axis A, the electronic device 101 may include a folded state and an unfolded state. The folded state may be a state in which the first housing 210 and the second housing 220 face each other, and the angle formed by the first housing 210 and the second housing 220 may be less than a predetermined angle (e.g., 10 degrees). The unfolded state may be a state in which the electronic device 101 is fully unfolded or partially unfolded, and an angle formed by the first housing 210 and the second housing 220 may be larger than or equal to the predetermined angle.

FIG. 2 illustrates an unfolded state of the electronic device 101 in which the first housing 210 and the second housing 220 form an angle of about 180°. FIG. 2 illustrates the folded state of the electronic device 101 in which the first housing 210 and the second housing 220 face each other and are parallel to each other. In the folded state, the first area 231a and the second area 231b of the first display 230 may be positioned to face each other, and the folding area 231c may be bent.

According to an embodiment of the disclosure, the folding of the electronic device 101 may be implemented in two types: "in-folding" in which the first area 231a and the second area 231b are folded to face each other; and "out-folding" in which the first area 231a and the second area 231b are folded to face in opposite directions. For example, in the in-folding state, the first area 231a and the second area 231b may be substantially concealed, and in the fully unfolded state, the first area 231a and the second area 231b may be disposed to face in substantially the same direction. For example, in the out-folding state, the first area 231a and the second area 231b may be disposed to face in opposite directions to be exposed to the outside, and in the fully unfolded state, the first area 231a and the second area 231b may be disposed to face in substantially the same direction.

According to an embodiment of the disclosure, the first display 230 may include a display panel (not shown) and a window member (not shown), and at least a portion of the first display 230 may be formed to be flexible. Although not illustrated separately, it will be easily understood by one of ordinary skill in the art that the first display 230 or the display panel includes various layers such as a light emitting layer, substrate(s) encapsulating the light emitting layer, an electrode or a wiring layer, and/or adhesive layer(s) bonding different adjacent layers. When the first display 230 (e.g., the folding area 231c) is deformed into a flat plate shape and a curved shape, relative displacement may occur between layers constituting the first display 230. The relative displacement according to the deformation of the first display 203 may increase as it is farther from the folding axis A and/or as the thickness of the first display 230 increases.

According to an embodiment of the disclosure, the window member, e.g., the thin film plate, may serve as a protective film for protecting the display panel. As a protection film, a thin film plate may be formed of a material that protects the display panel from external impact, is robust against scratches, and causes fewer creases in the folding area 231c when the housings 210 and 220 are repeatedly folded and unfolded. For example, the material of the thin film plate may include a clear polyimide (CPI) film or ultra-thin glass (UTG).

According to an embodiment of the disclosure, the electronic device 101 may further include protective member(s) 206 or decorative covers(s) 218 and 228 disposed on at least a portion of the edge of the first display 230 on the front surface (e.g., the first surface 210a or the third surface 220a). As an example, the protective member 206 and the decorative covers 218 and 228 may be connected to each other to surround the edge of the first display 230. The protective member 206 or the decorative covers 218 and 228 may prevent at least a portion of an edge of the first display 230 from contacting a mechanical structure (e.g., the first housing 210 or the second housing 220). The protective member 206 or the decorative covers 218 and 228 may be visually exposed to the outside of the electronic device 101.

According to an embodiment of the disclosure, the decorative covers 218 and 228 and the protective member 206 may be connected to each other. As an example, the decorative covers 218 and 228 and the protective member 206 may be integrally formed. The decorative covers 218 and 228 may extend along the folding axis A. The decorative covers 218 and 228 may include a first decorative cover 218 disposed between a portion of an edge of the first area 231a of the first display 230 and an inner wall of the first housing 210. The decorative covers 218 and 228 may include a second decorative cover 228 disposed between a portion of an edge of the second area 231b of the first display 230 and an inner wall of the second housing 220. As an example, the first decorative cover 218 and the second decorative cover 228 may extend substantially side by side along the folding axis A.

According to an embodiment of the disclosure, the first speaker hole 245 may be formed in the decorative cover 218 or the protective member 206 interposed between the edge of the first area 231a of the first display 230 and the inner wall of the first housing 210. As an example, the first speaker hole 245 may be formed in the first decorative cover 218. Preferably, the first speaker hole 245 may be formed in proximity to an end of a first housing 310 being furthest from the folding axis A.

FIG. 4 is an exploded perspective view illustrating an electronic device 101 according to an embodiment.

The description of the first housing 210 and the second housing 220 made with reference to FIGS. 2 and 3 may be equally applied to the first housing 310 and the second housing 320 with the same name, illustrated in FIG. 4.

Referring to FIG. 4, according to an embodiment of the disclosure, the first display 230 may be exposed through a significant portion of the front surface of the electronic device 101. In an embodiment, the shape of the first display 230 may be formed to be substantially the same as the shape of the periphery of the front surface of the electronic device 101.

In FIG. 4, 'Y' may mean a length direction of the electronic device 101 in the second state. Further, in an embodiment of the present invention, '+Y' may mean the upward direction of the electronic device 101 around the folding axis A of the electronic device 101, and '-Y' may mean the downward direction of the electronic device 101 around the folding axis A of the electronic device 101.

According to an embodiment of the disclosure, the foldable housing of the electronic device 101 includes a first housing 210, 310 and a second housing 220, 320. According to an embodiment, the first housing 210 may include a first surface 210a and a second surface 210b facing in a direction opposite to the first surface 210a. The second housing 220 may include a third surface 220a and a fourth surface 220b facing in a direction opposite to the third surface 220a. The electronic device 101 or the foldable housing 210, 220, 260 may additionally or alternatively include a bracket assembly 217, 227. The bracket assembly 217, 227 may include a first bracket assembly 217 disposed in the first housing 210 and a second bracket assembly 227 disposed in the second housing 220. At least a portion of the bracket assembly 217, 227, e.g., at least a portion of the first bracket assembly 217 and at least a portion of the second bracket assembly 227, may serve as a plate for supporting the hinge structure 270.

According to an embodiment of the disclosure, various electric components may be disposed on the printed circuit board 216, 226. For example, a processor (e.g., the processor 120 of FIG. 1), memory (e.g., the memory 130 of FIG. 1), and/or an interface (e.g., the interface 177 of FIG. 1) may be mounted on the printed circuit board 216, 226. The processor may include one or more of, e.g., a central processing unit, an application processor, a graphic processing device, an image signal processing, a sensor hub processor, or a communication processor. The memory may include, e.g., a volatile or non-volatile memory. The interface may include, e.g., a high definition multimedia interface (HDMI), a universal serial bus (USB) interface, a secure digital (SD) card interface, and/or an audio interface. The interface may electrically or physically connect, e.g., the electronic device 101 with an external electronic device and may include a USB connector, an SD card/multimedia card (MMC) connector, or an audio connector.

According to an embodiment of the disclosure, the printed circuit boards 216, 226 may include a first printed circuit board 216 disposed on the side of the first bracket assembly 217 and a second printed circuit board 226 disposed on the side of the second bracket assembly 227. The first printed circuit board 216 and the second printed circuit board 226 may be disposed inside the space formed by the foldable housing 210, 220, 260, the bracket assembly 217, 227, the first back cover 240 and/or the second back cover 250. Components for implementing various functions of the electronic device 101 may be disposed on the first printed circuit board 216 and the second printed circuit board 226. For example, a processor may be disposed on the first printed circuit board 216, and an audio interface may be disposed on the second printed circuit board 226.

According to an embodiment of the disclosure, batteries 215, 225 may be disposed adjacent to the printed circuit board 216, 226 to supply power to the electronic device 101. At least a portion of the batteries 215, 225 may be disposed on substantially the same plane as the printed circuit board 216 or 226. According to an embodiment, a first battery 215 may be disposed adjacent to the first printed circuit board 216, and a second battery 225 may be disposed adjacent to the second printed circuit board 226. The batteries 215, 225 may be a device for supplying power to at least one component of the electronic device 101. The battery 189 may include, e.g., a primary cell which is not rechargeable, a secondary cell which is rechargeable, or a fuel cell. The batteries 215, 225 may be integrally or detachably disposed inside the foldable housing 210, 220, 260.

According to an embodiment of the disclosure, the hinge structure 270 may be a component to provide a folding axis (e.g., the folding axis A of FIG. 2) and rotatably connect or couple the foldable housing 210, 220, 260 and/or the bracket assembly 217, 227. The hinge structure 270 may include a first hinge structure 271 disposed on the side of the first printed circuit board 216 and a second hinge structure 272 disposed on the side of the second printed circuit board 226. The hinge structure 270 may be disposed between the first printed circuit board 216 and the second printed circuit board 226. According to an embodiment, the hinge structure 270 may be formed substantially integrally with at least a portion of the first bracket assembly 217 and at least a portion of the second bracket assembly 227.

According to an embodiment of the disclosure, a 'housing structure' may include the foldable housing210, 220, 260 and may denote one resultant from assembling and/or combining at least one component disposed in the foldable housing 210, 220, 260. The housing structure may include a first housing structure and a second housing structure. For example, a component assembled to include at least one component among the first housing 210 and the first bracket assembly 217, the first printed circuit board 216, and the first battery 215 disposed inside the first housing 210 may be referred to as the 'first housing structure.' As another example, a component assembled to include at least one component among the second housing 220 and the second bracket assembly 227, the second printed circuit board 226, and the second battery 225 disposed inside the second housing 220 may be referred to as the 'second housing structure.' However, it should be noted that the 'first housing structure and the second housing structure' are not limited to the addition of the above-described components, but may add or omit various other components.

According to an embodiment of the disclosure, the flexible connection member 280 may be, e.g., a flexible printed circuit board (FPCB). The flexible connection member 280 may connect various electrical elements disposed on the first printed circuit board 216 and the second printed circuit board 226. To this end, the flexible connection member 280 may be disposed to cross the 'first housing structure' and the 'second housing structure'. According to an embodiment, the flexible connection member 280 may be disposed to cross at least a portion of the hinge structure 270. According to an embodiment, the flexible connection member 280 may be configured to connect the flexible printed circuit board 216 and the second printed circuit board 226 across the hinge structure 270 along a direction parallel to, e.g., the y axis of FIG. 4. As another example, the flexible connection member 280 may extend or be disposed through the openings 273, 274 formed in the hinge structure 270. In this case, a portion 281 of the flexible connection member 280 may be disposed over one side (e.g., upper portion) of the first hinge structure 271, and another portion 282 of the flexible connection member 280 may be disposed over one side (e.g., upper portion) of the second hinge structure 272. Another portion 283 of the flexible connection member 280 may be disposed on the other side (e.g., lower portion) of the first hinge structure 271 and the second hinge structure 272. A space (hereinafter, referred to as a 'wiring space') surrounded by at least a portion of the first hinge structure 271, at least a portion of the second hinge structure 272, and at least a portion of the hinge cover 260 may be formed in a position adjacent to the first hinge structure 271 and the second hinge structure 272. According to an embodiment, at least a portion 283 of the flexible connection member 280 may be disposed in the wiring space.

According to an embodiment of the disclosure, the hinge cover 260 may be a component that covers at least a portion of the hinge structure 270 or the wiring space. In an embodiment, the hinge cover 260, together with the hinge structure 270, may form the wiring space and protect components (e.g., at least a portion 283 of the flexible connection member 280) disposed in the wiring space from external impact. According to an embodiment, the hinge cover 260 may be disposed between the first housing 210 and the second housing 220. In the electronic device 101 which is of an in-folding type, the hinge cover 260 may be at least partially concealed by the foldable housing 210, 220, 260. For example, in the folded state, the hinge cover 260 may be visually exposed to the external space between the rear surface (e.g., the first back cover 240) of the first housing 210 and the back cover (e.g., the second back cover 250) of the second housing 220 and, in the unfolded state, the hinge cover 360 may be substantially received inside the first housing 210 or the second housing 220 to be visually concealed.

According to an embodiment of the disclosure, the antenna module 219, 229 (e.g., the antenna module 197 of FIG. 1) may be disposed between the back cover 240, 250 and the batteries 215, 225. According to an embodiment, the antenna module 219, 229 may include a first antenna module 219 disposed on the side of the first housing 210 and a second antenna module 229 disposed on the side of the second housing 220. The antenna module 219, 229 may include, e.g., a near field communication (NFC) antenna, a wireless charging antenna, and/or a magnetic secure transmission (MST) antenna, performing short-range communication with an external device or wirelessly transmitting/receiving power required for charging. According to another embodiment, an antenna structure may be formed by a portion or combination of the side bezel structure of the foldable housing 210, 220, 260 and/or bracket assembly.

According to an embodiment of the disclosure, the back cover 240, 250 may include a first back cover 240 and a second back cover 250. The back cover 240, 250 may be combined with the foldable housing 210, 220, 260 to protect the above-described components (e.g., the printed circuit board 216, 226, the batteries 215, 225, the flexible connection member 280, or the antenna module 219, 229) disposed in the foldable housing 210, 220, 260. As described above, the back cover 240, 250 may be formed substantially integrally with the foldable housing 210, 220, 260.

According to an embodiment of the disclosure, the protective member 206 and/or the decorative covers 218 and 228 may protect at least a portion of the edge of the first display 230. The protective member 206 may be disposed between the edge of the first area 231a (see FIG. 2) of the first display 230 and the inner wall of the first housing 210 and/or between the edge of the second area 231b (see FIG. 2) of the first display 230 and the inner wall of the second housing 220 to prevent the edge of the first display 230 from directly contacting the inner walls of the housings 210 and 220.

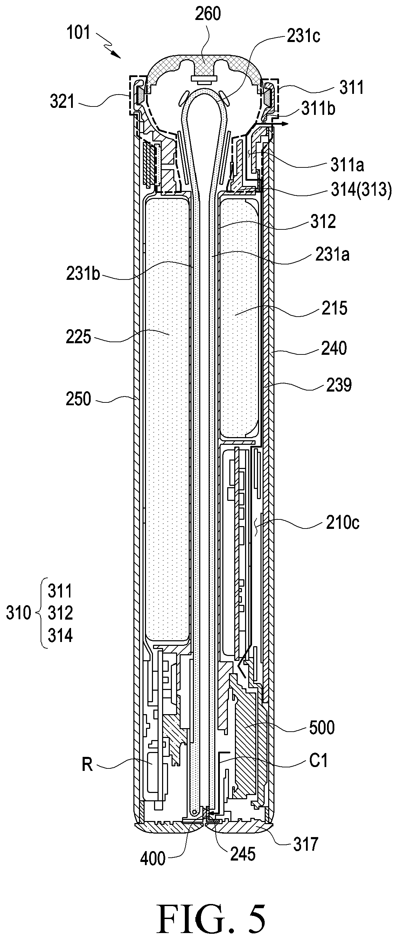

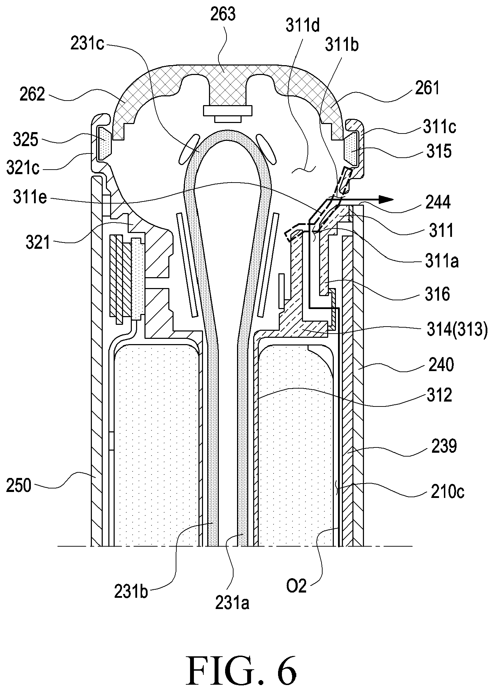

FIG. 5 is a cross-sectional view illustrating an electronic device 101 in a folded state according to an embodiment of the disclosure. FIG. 6 is an enlarged view illustrating a portion of FIG. 5.

Referring to FIGS. 5 and 6, according to an embodiment of the disclosure, the electronic device 101 includes a speaker 500 (e.g., the sound output module 155 of FIG. 1). The speaker 500 may be disposed in a first inner space 210c of the first housing 310. For example, the sound generated from the speaker 500 may go out through the first speaker hole 245. For example, the sound generated from the speaker 500 may spread to the first inner space 210c of the first housing 310. A portion of the electronic device 101 from the speaker 500 to the first speaker hole 245 may be referred to as a duct.

According to an embodiment of the disclosure, the first speaker hole 245 may be positioned adjacent to the other side 317 of the first housing 310. Components (e.g., the first battery 215 or the speaker 500) inside the first housing 310 may be disposed between one side 313 and the other side 317 of the first housing 310. As an example, one side 313 and the other side 317 of the first housing 310 may extend substantially side by side along the folding axis A direction (e.g., the X direction of FIG. 4). Preferably, the first speaker hole 245 may be formed in proximity to an end of the first housing 310 being furthest from the folding axis A i.e. the other side 317.

According to an embodiment of the disclosure, the electronic device 101 may include at least one microphone module R (e.g., the input module 150 of FIG. 1). For example, the microphone module R may be disposed inside the second housing 320. The external sound of the electronic device 101 may be introduced into the second housing 320 through a microphone hole (e.g., the microphone hole 243 of FIG. 2) of the second housing 320.

According to an embodiment of the disclosure, the electronic device 101 may include a first housing 310 (e.g., the first housing 210 of FIG. 4), a second housing 320 (e.g., the second housing 220 of FIG. 4), a first display 230, and a hinge cover 260.

According to an embodiment of the disclosure, the hinge cover 260 may cover at least a portion of the hinge structure 270 (see FIG. 4). The hinge cover 260 may be configured to be exposed to the outside of the electronic device 101. The hinge cover 260 may include a central portion 263, and one side 261 and the other side 262 of two opposite sides of the central portion 263. The one side 261 of the hinge cover 260 may be referred to as a first extending portion 261 extending from the central portion 263. The other side 262 of the hinge cover 260 may be referred to as a second extending portion 262 extending from the central portion 263.

According to an embodiment of the disclosure, the one side 261 of the hinge cover 260 may be adjacent to the overlapping portion 311 of the first housing 310. The other side 262 of the hinge cover 260 may be adjacent to the overlapping portion 321 of the second housing 320. The one side 261 of the hinge cover 260 may extend along the overlapping portion 311 of the first housing 310. The other side 262 of the hinge cover 260 may extend along the overlapping portion 321 of the second housing 320. The overlapping portions 311 and 321 of the first housing 310 and the second housing 320, and the one side 261 and the other side 262 of the hinge cover 260 may extend along the folding axis A (see FIG. 2).

According to an embodiment of the disclosure, the first housing 310 may include a bracket assembly 312 (e.g., the first bracket assembly 217 of FIG. 4) in which components of the electronic device 101 are disposed. One surface of the bracket assembly 312 may support the first display 230. The other surface of the bracket assembly 312 opposite to the one surface may support electronic components (e.g., the first battery 215) of the electronic device 101.

According to an embodiment of the disclosure, the first housing 310 may include a side wall 314 protruding from the bracket assembly 312 in one direction (e.g., the z-axis direction of FIG. 4). For example, the side wall 314 may protrude from the bracket assembly 312 toward the first display 230 or the second display 239. The side wall 314 may extend along at least a portion of an edge of the bracket assembly 312. The side wall 314 may support a component (e.g., the first battery 215) inside the electronic device 101.

According to an embodiment of the disclosure, the side wall 314 of the first housing 310 may include one side 313 adjacent to the hinge cover 260. The first housing 310 may include an overlapping portion 311 protruding from one side 313 of the side wall 314. The overlapping portion 311 of the first housing 310 may be one side of the first housing 310 that overlaps the one side 261 of the hinge cover 260 in the unfolded state of the electronic device 101.

According to an embodiment of the disclosure, the overlapping portion 311 may be positioned between one side 313 of the side wall 314 of the first housing 310 and one side 261 of the hinge cover 260. For example, the battery 215 may be positioned between the speaker 500 and the overlapping portion 311 of the housing 310. For example, the battery 215 may be positioned adjacent to the overlapping portion 311.

According to an embodiment of the disclosure, the overlapping portion 311 of the first housing 310 may be configured to overlap the hinge cover 260. When the electronic device 101 is folded or unfolded about a folding axis (e.g., the folding axis A of FIG. 2), an overlapping area (hereinafter, referred to as an overlapping area) between the overlapping portion 311 and the hinge cover 260 may change. When the electronic device 101 switches from the unfolded state to the folded state, the overlapping area may be reduced, and when the electronic device 101 switches from the folded state to the unfolded state, the overlapping area may be increased.

According to an embodiment of the disclosure, the overlapping portion 311 may include a facing surface 311e configured to at least partially face one side 261 of the hinge cover 260. As an example, when the foldable housing 260, 310, and 320 is unfolded, or when the first housing 310 and the second housing 320 are unfolded, the opposite surface 311e may face one side 261 of the hinge cover 260. As an example, when the foldable housing 260, 310, and 320 is folded, or when the first housing 310 and the second housing 320 are folded, the facing surface 311e may not face the one side 261 of the hinge cover 260.

According to an embodiment of the disclosure, the facing surface 311e of the overlapping portion 311 of the first housing 310 may have a shape corresponding to the outer surface of the one side 261 of the hinge cover 260. As an example, the outer surface of one side 261 of the hinge cover 260 may be convex, and the facing surface 311e of the overlapping portion 311 may be concave to correspond thereto. A connection hole 311a and a second speaker hole 311b may be disposed on the facing surface 311e of the overlapping portion 311 of the first housing 310.

According to an embodiment of the disclosure, the overlapping portion 311 may include a duct 316. For example, the second inner space 311d between the hinge cover 260 and the overlapping portion 311 and the first inner space 210c of the first housing 310 may be spatially connected to each other through the duct 316. The sound generated from the speaker 500 may be transferred to the second inner space 311d through the first inner space 210c and the duct 316. The duct 316 may be a separate component mounted on the overlapping portion 311 or may be a portion of the overlapping portion 311 that has been penetrated.

According to an embodiment of the disclosure, the overlapping portion 311 may include a connection hole 311a. The connection hole 311a may be formed at one end of the duct 316. The connection hole 311a may be positioned on the facing surface 311e of the overlapping portion 311. The second inner space 311d and the first inner space 210c of the first housing 310 may be spatially connected to each other through the connection hole 311a. For example, the connection hole 311a may be formed toward the second inner space 311d between the hinge cover 260 and the overlapping portion 311.

According to another embodiment of the disclosure, a first opening (not shown) other than the duct 316 may be disposed in the overlapping portion 311. As an example, the first opening (not shown) may include a hole formed in a direction (e.g., the X-axis direction of FIG. 4) penetrating the first back cover 240. According to another embodiment of the disclosure, the sound generated from the speaker 500 may sequentially pass through the first inner space 210c and the first opening (not shown) disposed in the overlapping portion 311 and may be transferred to the second inner space 311d.

According to an embodiment of the disclosure, the overlapping portion 311 includes a second speaker hole 311b. Sound generated from the speaker 500 may be propagated to the outside of the electronic device 101 through the second speaker hole 311b. The second speaker hole 311b may be positioned on the facing surface 311e of the overlapping portion 311. The second speaker hole 311b may penetrate the overlapping portion 311.

Preferably, the second speaker hole 311b may be formed in proximity to an end of the first housing 310 being closest to the folding axis A. In other words, the second speaker hole 311b may be formed at an end of the first housing 310 that is opposite to the end in proximity to which the speaker hole 245 is positioned. Preferably, the first speaker hole 245 and the second speaker hole 311b may be connected to the outside of the electronic device in opposite directions.

According to an embodiment of the disclosure, the second inner space 311d and the outer space of the electronic device 101 may be spatially connected to each other by the second speaker hole 311b. As an example, the second speaker hole 311b may be formed toward the first back cover 240 and may overlap the notch 244. For example, the second speaker hole 311b may be spatially connected to the notch 244 of the first back cover 240.

According to another embodiment of the disclosure, the notch 244 may not be formed in the edge of the first back cover 240, but a second opening (not shown) may be formed. As an example, the second opening (not shown) may include a slot formed in an edge of the first back cover 240 and extending along the edge of the second display 239. According to another embodiment of the disclosure, the sound generated by the speaker 500 may sequentially pass through the second speaker hole 311b and the second opening (not shown) and may be transferred to the outside of the electronic device 101.

According to an embodiment of the disclosure, the opening directions of the second speaker hole 311b and the connection hole 311a may be different from each other. As an example, the second speaker hole 311b may be formed in a direction toward the first back cover 240, and may be formed in a direction substantially perpendicular to the direction toward which the connection hole 311a faces.

According to an embodiment of the disclosure, the second speaker hole 311b and the connection hole 311a may be spaced apart from each other. As an example, the connection hole 311a and the second speaker hole 311b may be positioned on one rotation orbit defined with respect to a folding axis (e.g., the folding axis A of FIG. 2). The second speaker hole 311b may be positioned between the sealer 315 and the connection hole 311a on the overlapping portion 311.

According to an embodiment of the disclosure, the sealer 315 may be disposed at the edge 311c of the overlapping portion 311. The sealer 315 may be disposed between the edge 311c of the overlapping portion 311 and the hinge cover 260. The sealer 315 may seal between the edge 311c of the overlapping portion 311 and the outer surface of the hinge cover 260. The sealer 315 may prevent foreign substances from entering the electronic device 101.

According to an embodiment of the disclosure, the electronic device 101 may include a second housing 320. The second housing 320 may include an overlapping portion 321 configured to overlap the other side 262 of the hinge cover 260. The overlapping portion 321 may be positioned adjacent to the other side 262 of the hinge cover 260.

According to an embodiment of the disclosure, the sealer 325 may be disposed at the edge 321c of the overlapping portion 321. The sealer 325 may be disposed between the edge 321c of the overlapping portion 321 and the hinge cover 260. The sealer 325 may seal between the edge 321c of the overlapping portion 321 and the outer surface of the hinge cover 260. The sealer 325 may prevent foreign substances from entering the electronic device 101.

According to an embodiment of the disclosure, the electronic device 101 may include a damper 400 configured to shield at least a portion of the first speaker hole 245. The damper 400 may shield at least a portion of the first speaker hole 245 in the folded state of the electronic device 101. For example, the damper 400 may be disposed on the second decorative cover 228 (see FIG. 2). As an example, the damper 400 may be integrally formed with the second decorative cover 228. The sealing of the first speaker hole 245 by the damper 400 may allow to direct the sound from the speaker 500 to the second speaker hole 311b.

According to an embodiment of the disclosure, the electronic device 101 may include a damper 400. The damper 400 may be configured to cover the first speaker hole 245 when the electronic device 101 is in the folded state. As an example, the damper 400 and the first speaker hole 245 may be positioned on one rotation orbit defined with respect to a folding axis (e.g., the folding axis A of FIG. 2). Accordingly, the damper 400 and the speaker hole 245 may overlap each other when the electronic device 101 is folded.

According to an embodiment of the disclosure, the damper 400 may have a shape corresponding to the shape of the first speaker hole 245. When the electronic device 101 is in the folded state, the damper 400 may contact the first speaker hole 245 to seal the first speaker hole 245, or may cover the first speaker hole 245 while being adjacent to the first speaker hole 245. The volume of the sound radiated through the first speaker hole 245 may be reduced by the damper 400.

According to an embodiment of the disclosure, the sound generated from the speaker 500 may be radiated to the outside of the electronic device 101 along a predetermined path. The sound transmission path from the speaker 500 to the holes 245 and 311b open toward the outside of the electronic device 101 may be referred to as a closed path or an open path.

According to an embodiment of the disclosure, the closed path does not only mean when the sound transmission path is blocked as 'closed' means. For example, the closed path may include not only a case in which at least one of a hole (e.g., the connection hole 311a, the second speaker hole 311b, or the first speaker hole 245) or a passage (e.g., the duct 316) included in the sound transmission path is sealed by another component to block the sound transmission path, but also a case in which at least one of the hole or the passage included in the sound transmission path is covered by another adjacent component due to an operation (e.g., folding or unfolding) of the electronic device 101, so that most of the sound (e.g., 80 percent) is not radiated to the outside of the electronic device and is reflected to the inside.

According to an embodiment of the disclosure, the open path may include not only a case in which all of the holes or passages constituting the sound transmission path are sealed by another component or do not overlap with another component, but also a case in which at least one of the holes or passages constituting the sound transmission path is partially covered by another component but most of the sound (e.g., 80 percent) is not reflected.

According to an embodiment of the disclosure, when the electronic device 101 is in the folded state, a portion of the sound generated by the speaker 500 may propagate to the first speaker hole 245 along the first closed path C1. When the electronic device 101 is in the folded state, the damper 400 may cover the first speaker hole 245. Most of the sound propagated to the first speaker hole 245 by the damper 400 may be reflected into the electronic device 101.

According to an embodiment of the disclosure, a portion of the sound generated from the speaker 500 may be radiated to the outside of the electronic device 101 along the second open path O2. The second open path O2 may include a peripheral space of the speaker 500, a first inner space 210c of the first housing 310, a duct 316, a connection hole 311a, and/or a second speaker hole 311b. The second open path O2 is a path through which sound generated from the speaker 500 is radiated to the outside of the electronic device 101, and may be referred to as a second sound output path O2. The second open path O2 is described below in detail with reference to FIGS. 9 and 10.

According to an embodiment of the disclosure, the connection hole 311a and the notch 244 (see FIGS. 2 and 3) may be spaced apart from each other. For example, the notch 244 may be positioned between the edge 311c of the overlapping portion 311 and the second display 239. As an example, the connection hole 311a may be positioned below the second display 239, and the notch 244 may be positioned around the second display 239.

According to an embodiment of the disclosure, the notch 244 may be positioned in an edge of the first back cover 240 corresponding to the second speaker hole 311b. As an example, the notch 244 may be formed at in edge of the first back cover 240 overlapping the second speaker hole 311b.

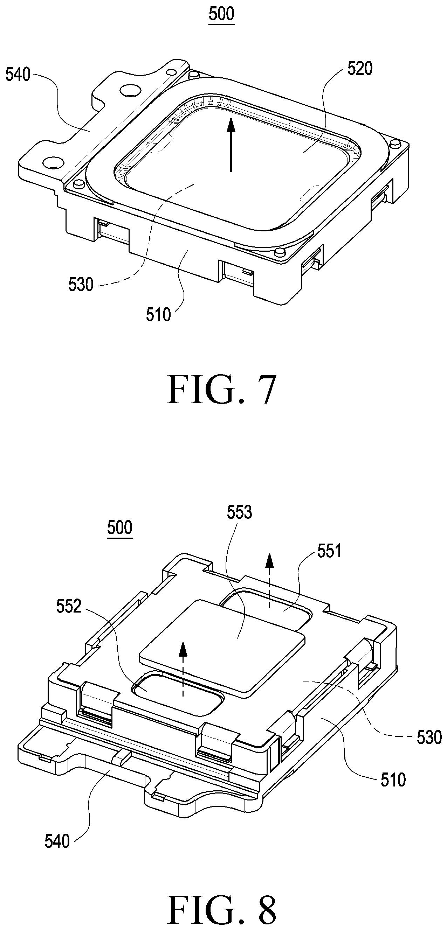

FIG. 7 is a perspective view illustrating a diaphragm 520 of the speaker 500 according to an embodiment of the disclosure. FIG. 8 is a perspective view illustrating a vent portion 551 or 552 of the speaker 500 according to an embodiment of the disclosure.

Referring to FIGS. 7 and 8, the speaker 500 according to an embodiment of the disclosure may include a frame 510. The frame 510 may include a fastening portion 540. The fastening portion 540 may be coupled to an inner portion (e.g., the bracket assembly 312) of the first housing 310, and the speaker 500 may be stably disposed in the first inner space 210c of the first housing 310.

According to an embodiment of the disclosure, the speaker 500 may include a vibration generator 530. The vibration generator 530 may be positioned in a space surrounded by the frame 510 (hereinafter, inside the frame 510). As an example, the vibration generator 530 may include a magnet (not shown) forming a magnetic field and a coil (not shown) configured to be reciprocated by the magnet.

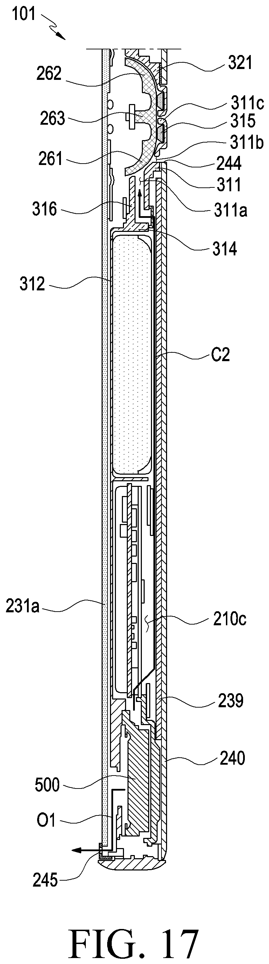

According to an embodiment of the disclosure, the speaker 500 may include a diaphragm 520. The diaphragm 520 may be vibrated by the vibration generator 530. The sound generated by the vibration of the diaphragm 520 may be radiated to the outside of the diaphragm 520. As an example, the sound radiated to the outside of the diaphragm 520 may be transferred to the first speaker hole 245 along the first open path O1 (see FIG. 17).

According to an embodiment of the disclosure, the frame 510 of the speaker 500 may include at least one (e.g., two) vent portion 551 and 552. As an example, FIG. 8 illustrates a case in which two vent portions 551 and 552 are formed. However, unlike that illustrated in FIG. 8, the speaker 500 may include only one vent portion 551 or 552.

According to an embodiment of the disclosure, the vent portions 551 and 552 may be disposed in a vent hole (not shown) formed in the frame 510. The vent portions 551 and 552 may cover the vent hole formed in the frame 510. Air may enter and exit through the vent portions 551 and 552. The vent portions 551 and 552 may reduce the pressure change inside the diaphragm 520 (e.g., inside the frame 510) due to the vibration of the diaphragm 520. As an example, the vent portions 551 and 552 may include a breathable mesh. For example, the vent portions 551 and 552 may be formed of a material having impermeability and breathability.

According to an embodiment of the disclosure, the diaphragm 520 and the vent portions 551 and 552 may be positioned on two opposite surfaces of the speaker 500. The vibration generator 530 may be disposed between the two opposite surfaces of the speaker 500. As an example, the diaphragm 520 may be positioned on the front surface of the speaker 500 to radiate sound to the front of the speaker 500, and the vent portions 551 and 552 may be positioned on the rear surface of the speaker 500 to radiate sound generated by the diaphragm 520 to the rear of the speaker 500 through the vent portions 551 and 552.

According to an embodiment of the disclosure, some of the sound generated by the vibration of the diaphragm 520 may be radiated to the outside of the speaker 500 through the vent portions 551 and 552. Sound radiated to the outside of the speaker 500 through the vent portions 551 and 552 may be resonated in the inner space (e.g., the first inner space 210c and/or the second inner space 311d of FIGS. 5 and 6) of the electronic device 101. As an example, the sound radiated through the vent portions 551 and 552 may be transferred to the second speaker hole 311b along the second open path O2 (see FIG. 6).

According to an embodiment of the disclosure, the vent portions 551 and 552 and the diaphragm 520 may be disposed on one side and the other side of the frame 510. As an example, the vent portions 551 and 552 and the diaphragm 520 may be positioned on one side and the other side of the frame 510 opposite to each other. The diaphragm 520 may be referred to as a first surface 520 of the speaker 500. The vent portions 551 and 552 may be referred to as a second surface of the speaker 500.

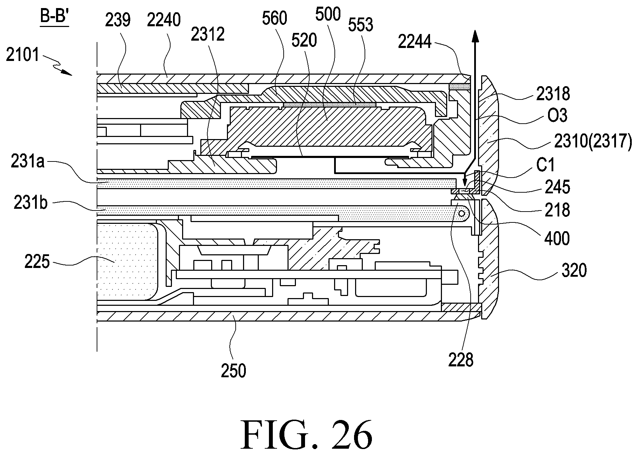

According to an embodiment of the disclosure, the speaker 500 may include a pad 553. The pad 553 may be disposed on the frame 510. The pad 553 may be disposed between a peripheral structure (e.g., the cap 560 of FIG. 26) of the speaker 500 and the frame 510. The pad 553 may be disposed to face the diaphragm 520. The pad 553 may reduce the displacement of the frame 510 of the speaker 500 according to the vibration of the diaphragm 520.

FIG. 9 illustrates propagation paths C1 and O2 of a sound generated by the speaker 500 in a folded state of an electronic device 101 according to an embodiment. FIG. 10 is an enlarged view of part X of FIG. 9, illustrating a state in which the first back cover 240 is removed.

Referring to FIG. 9, according to an embodiment of the disclosure, in the folded state of the electronic device 101, the sound generated by the speaker 500 may propagate along the first closed path C1 and the second open path O2. The first closed path C1 may extend from the speaker 500 toward the first speaker hole 245. The second open path O2 may extend from the speaker 500 toward the notch 244.

According to an embodiment of the disclosure, the second open path O2 may extend along a bottom surface (e.g., a surface facing the inside of the electronic device 101) of the first back cover 240. The second open path O2 may extend along a bottom surface (e.g., a surface facing the first inner space 210c) of the second display 239 disposed on the bottom surface of the first back cover 240.

Referring to FIGS. 9 and 10, according to an embodiment of the disclosure, the duct 316 may include a flow path portion 3161 and an inlet portion 3162. For example, the second open path O2 may include an inlet portion 3162, a flow path portion 3161, a connection hole 311a of the overlapping portion 311, and a second speaker hole 311b of the duct 316.

According to an embodiment of the disclosure, the flow path portion 3161 may be formed through the overlapping portion 311. The flow path portion 3161 may extend in a width direction (e.g., the Y-axis direction of FIG. 4) of the overlapping portion 311. As an example, the flow path portion 3161 may extend straight along the thickness direction of the overlapping portion 311.

According to an embodiment of the disclosure, the inlet portion 3162 of the duct 316 may be positioned at one end of the flow path portion 3161. The connection hole 311a of the overlapping portion 311 may be positioned at the other end of the flow path portion 3161. The inlet portion 3162 and the connection hole 311a may be spatially connected through the flow path portion 3161.

According to an embodiment of the disclosure, the inlet portion 3162 may include a breathable mesh. For example, the inlet portion 3162 may be formed of a material having impermeability and breathability. The first inner space 210c of the first housing 310 and the inside of the flow path portion 3161 may be spatially connected to each other through the inlet portion 3162. The inlet portion 3162 may block the movement of foreign substances between the first inner space 210c of the first housing 310 and the flow path portion 3161.

According to an embodiment of the disclosure, there may be a plurality of ducts 316 (e.g., two). As an example, a plurality of ducts 316 may be a pair. For example, the pair of ducts 316 may be spaced apart from each other in the folding axis A direction (e.g., the X-axis direction of FIG. 4). For example, the pair of ducts 316 may be positioned on two opposite sides of the through hole 319.

According to an embodiment of the disclosure, the second speaker hole 311b may be spaced apart from the connection hole 311a in a direction (e.g., the -Y-axis direction of FIG. 4) in which the overlapping portion 311 protrudes from one side 313 of the side wall 314. For example, the second speaker hole 311b may be an elongated slot. For example, the second speaker hole 311b may be a slot extending along the length direction (e.g., the X-axis direction of FIG. 4) of one side 313 of the side wall 314. The first holes 311a may be spaced inside the first housing 310 from two opposite ends of the second speaker hole 311b.

According to an embodiment of the disclosure, the first housing 310 may include a through hole 319 through which a portion (e.g., the portion 281 of the flexible connection member 280 of FIG. 4) of the flexible connection member passes. A portion 281 of the flexible connection member 280 may extend toward the inside of the second housing 320 through the through hole 319. The through hole 319 may be positioned between the two ducts 316. The through hole 319 may be positioned between the inlet portions 3162 of the two ducts 316.

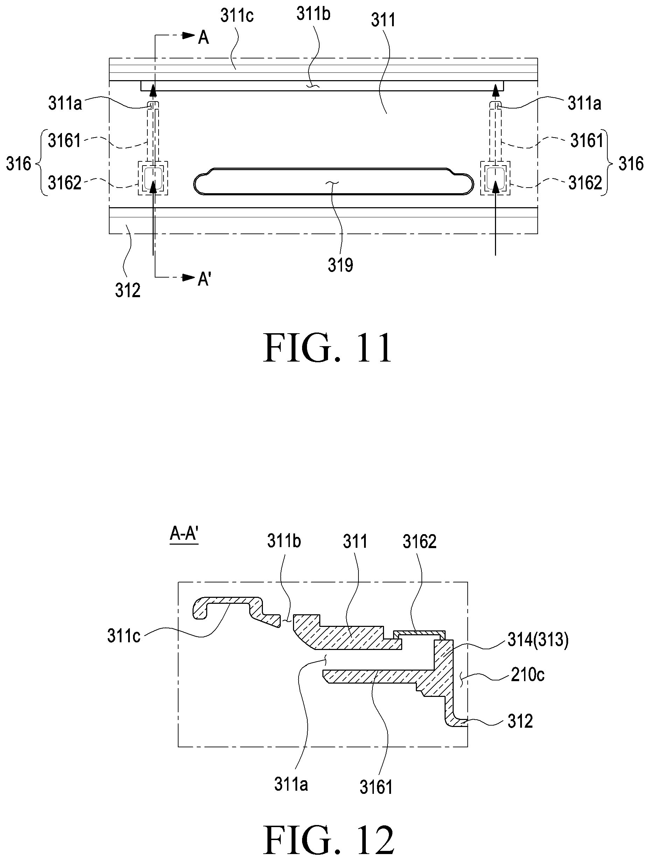

FIG. 11 is a rear view illustrating a portion of the first housing 310 according to an embodiment of the disclosure. FIG. 12 is a cross-sectional view illustrating the first housing 310 taken along line A-A' of FIG. 11.

Referring to FIGS. 11 to 12, according to an embodiment of the disclosure, the flow path portion 3161 of the duct 316 may have a bent structure. For example, in the flow path portion 3161, a direction extending from the connection hole 311a and a direction extending from the inflow portion 3162 may intersect each other. The flow path portion 3161 may extend from the connection hole 311a along the width direction (e.g., the Y-axis direction of FIG. 4) of the overlapping portion 311. The flow path portion 3161 may extend from the inlet portion 3162 along the height direction (e.g., the Z-axis direction of FIG. 4) of the overlapping portion 311. As an example, the direction in which the flow path portion 3161 extends from the connection hole 311a and the direction in which the flow path portion 3162 extends from the inflow portion 3162 may be substantially orthogonal to each other.

According to an embodiment of the disclosure, the edge 311c of the overlapping portion 311 may include a recessed portion to allow the sealer 315 (see FIG. 6) to be disposed. The edge 311c of the overlapping portion 311 may be spaced apart from the second speaker hole 311b toward one side 261 of the hinge cover 260 along the width direction (e.g., the Y-axis direction of FIG. 4) of the overlapping portion 311. The edge 311c of the overlapping portion 311 may be at least partially exposed to the outside of the electronic device 101.

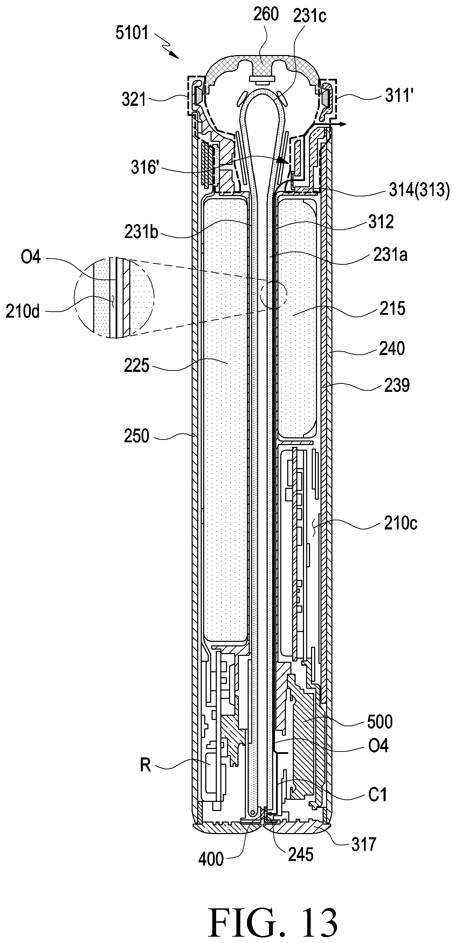

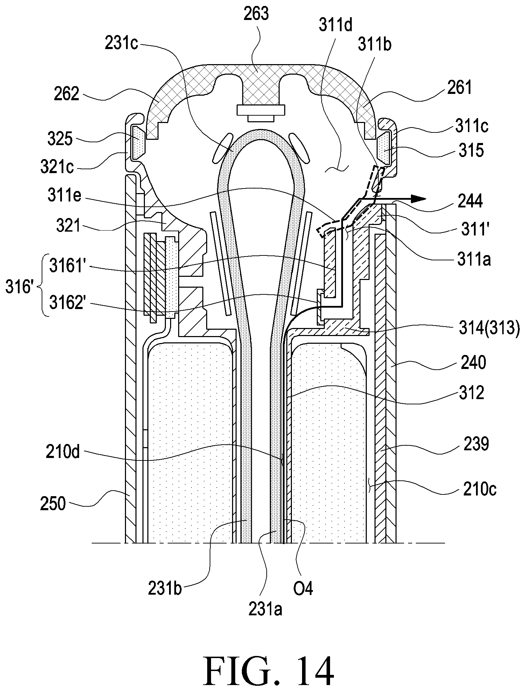

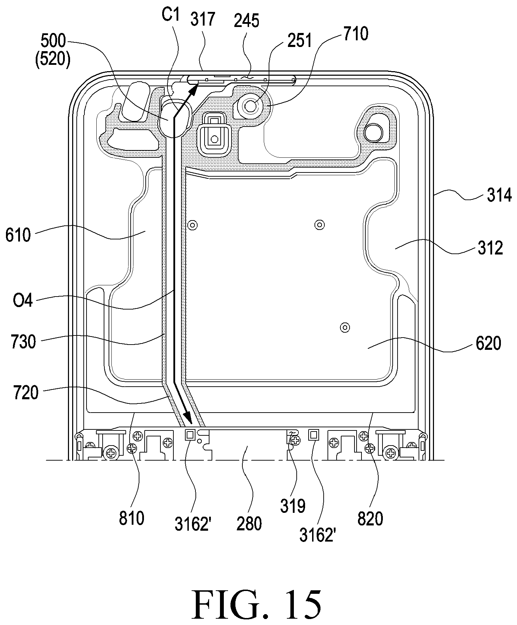

FIG. 13 is a cross-sectional view illustrating an electronic device 5101 in a folded state according to an embodiment of the disclosure. FIG. 14 is an enlarged view illustrating a portion of FIG. 13. FIG. 15 illustrates propagation paths C1 and O4 of a sound generated by the speaker 500 in a folded state of an electronic device 5101 according to an embodiment of the disclosure.

The description of the components (e.g., the overlapping portion 311, the duct 316, the flow path portion 3161, or the inlet portion 3162) made with reference to FIGS. 1 to 12 may be substantially identically applied to the components (e.g., the overlapping portion 311', the duct 316', the flow path portion 3161', or the inlet portion 3162') of the same names illustrated in FIGS. 13 to 15 unless contradictory.

Referring to FIGS. 13 and 14, an electronic device 5101 according to an embodiment of the disclosure may include a duct 316'. The duct 316' may be positioned in the overlapping portion 311'. The flow path portion 3161' may pass through the overlapping portion 311'. As an example, at least a portion of the sound generated by the speaker 500 may be transferred to the second speaker hole 311b through the flow path portion 3161'.

According to an embodiment of the disclosure, the third inner space 210d of the electronic device 101 and the inside of the flow path portion 3161' may be spatially connected to each other through the inlet portion 3162'. As an example, the inlet portion 3162' may include a breathable mesh. For example, the inlet portion 3162 may be formed of a material having impermeability and breathability. The inlet portion 3162' may block the inflow of foreign substances.

According to an embodiment of the disclosure, the third inner space 210d of the electronic device 5101 may be a space between the first display 230 and the first housing 310. As an example, the third inner space 210d may be a space between the first area 231a of the first display 230 and the bracket assembly 312 of the first housing 310 and the first bracket assembly 217 of FIG. 4.

According to an embodiment of the disclosure, the inlet portion 3162' of the duct 316' may be positioned at one end of the flow path portion 3161'. The connection hole 311a of the overlapping portion 311' may be positioned at the other end of the flow path portion 3161'.

According to an embodiment of the disclosure, the sound generated by the speaker 500 may be propagated along the first closed path C1 and the open path (or the fourth open path O4). As an example, the fourth open path O4 may include a third inner space 210d, an inlet portion 3162' of the duct 316', a flow path portion 3161', a connection hole 311a of the overlapping portion 311', a second inner space 311d, and a second speaker hole 311b. As another example, the sound generated from the speaker 500 may be radiated to the outside of the electronic device 5101 by sequentially passing through the third inner space 210d, the second inner space 311d, and the second speaker hole 311b without passing through the duct 316'.

According to an embodiment of the disclosure, the electronic device 5101 may include heat dissipation sheets 610 and 620. The heat dissipation sheets 610 and 620 may transfer heat accumulated in a high-temperature area (e.g., the area in which the printed circuit board 216 of FIG. 4 is disposed) inside the electronic device 5101 to a low-temperature area (e.g., the area in which the first battery 215 of FIG. 4 is disposed). For example, the heat dissipation sheets 610 and 620 may be thermally conductive metal (e.g., copper, aluminum, etc.) sheets.

According to an embodiment of the disclosure, the open path O4 may extend to cross the heat dissipation sheets 610 and 620. The heat dissipation sheet 610 may include a first heat dissipation sheet 610 and a second heat dissipation sheet 620 positioned on two opposite sides of the open path O4. A portion of the open path O4 corresponding to the third inner space 210d may be positioned between the first heat dissipation sheet 610 and the second heat dissipation sheet 620.

According to an embodiment of the disclosure, the electronic device 5101 may include adhesive members 710, 720, 730, 810, and 820. The adhesive members 710, 720, 730, 810, and 820 may be disposed between the first display 230 and the bracket assembly 312. The first area 231a of the first display 230 may be attached to the bracket assembly 312 of the first housing 310 by the adhesive members 710, 720, 730, 810, and 820. The space (e.g., the third inner space 210d of the open path O4) surrounded by the adhesive members 710, 720, 730, 810, and 820 may be waterproof and dustproof by the adhesive members 710, 720, 730, 810, and 820. As an example, the adhesive members 710, 720, 730, 810, and 820 may be double-sided tapes (e.g., Poron tapes) including low-density elastic bodies.

According to an embodiment of the disclosure, the adhesive members 710, 720, 730, 810, and 820 may include a first adhesive member 710 at least partially surrounding components (e.g., the camera device 251 and/or the speaker 500) of the electronic device 5101.

According to an embodiment of the disclosure, the adhesive members 710, 720, 730, 810, and 820 may include a second adhesive member 720 and a third adhesive member 730 that partially limit the open path O4. As an example, the second adhesive member 720 and the third adhesive member 730 may limit a portion of the open path O4 between the speaker 500 and the inlet portion 3162' of the duct 316'. According to an embodiment of the disclosure, the shape of the portion of the open path O4 limited by the second adhesive member 720 and the third adhesive member 730 may be determined according to the relative positions of the speaker 500 and the inlet portion 3162' of the duct 316'. As an example, FIG. 15 illustrates a case where the open path O4 is partially bent.

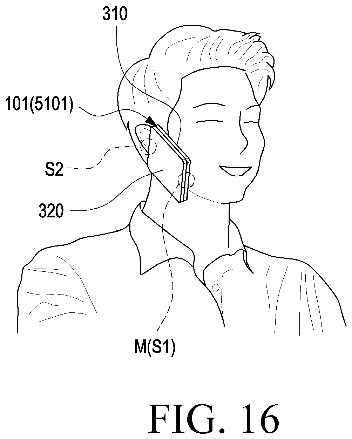

FIG. 16 illustrates an example in which calling is performed in a folded state of an electronic device 101 according to an embodiment of the disclosure.

Referring to FIGS. 9 and 16, the electronic device 101 according to an embodiment may include sound radiation portions S1 and S2 and a sound detection portion M. The user may make a call by listening to a received sound through the sound radiation portions S1 and S2 and transferring a voice through the sound detection portion M.

According to an embodiment of the disclosure, the first sound radiation portion S1 may be the first speaker hole 245. The second sound radiation portion S2 may be the second speaker hole 311b or the notch 344. A portion of the sound generated by the speaker 500 may be transferred to the first sound radiation portion S1 along the first closed path C1. A portion of the sound generated from the speaker 500 may be transferred to the second sound radiation portion S2 along the second open path O2 and may be radiated to the outside of the electronic device 101.

According to an embodiment of the disclosure, the sound detection portion M may be the microphone hole 243 (see FIGS. 2 and 3). The external sound of the electronic device 101 may be transferred to the microphone module R (see FIG. 5) inside the electronic device 101 through the sound detection portion M.

When the electronic device 101 according to an embodiment of the disclosure is in the folded state, the second sound radiation portion S2 and the sound detection portion M may be positioned at two opposite edges of the electronic device 101. FIG. 16 illustrates an example in which the second sound radiation portion S2 is positioned close to the user's ear portion, and the sound detection portion M is positioned close to the user's mouth portion. Accordingly, the user may make a call while the electronic device 101 is in the folded state.

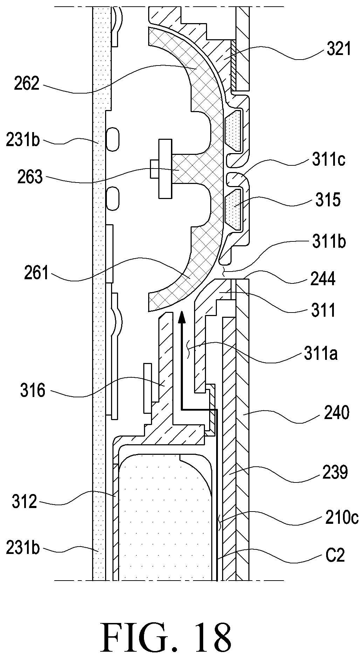

FIG. 17 is a cross-sectional view illustrating an electronic device 101 in an unfolded state according to an embodiment of the disclosure. FIG. 18 is an enlarged view illustrating a portion of FIG. 17.

Referring to FIGS. 17 and 18, when the electronic device 101 is in the unfolded state, the overlapping portion 311 and one side 261 of the hinge cover 260 may overlap each other. When the electronic device 101 is in the unfolded state, one side 261 of the hinge cover 260 may at least partially cover the connection hole 311a and the second speaker hole 311b. When the electronic device 101 is in the unfolded state, the facing surface 311e of the overlapping portion 311 of the first housing 310 may face the outer surface of one side 261 of the hinge cover 260. When the electronic device 101 is in the unfolded state, the connection hole 311a and the second speaker hole 311b may be shielded by one side 261 of the hinge cover 260. The sealing of the second speaker hole 311b by one side 261 of the hinge cover 260 allows to direct the sound from the speaker 500 to the first speaker hole 245.

According to an embodiment of the disclosure, when the electronic device 101 is in the unfolded state, a portion of the sound generated by the speaker 500 may be transferred to the connection hole 311a along the second closed path C2. Since the connection hole 311a and the second speaker hole 311b are covered by one side 261 of the hinge cover 260, the sound transferred along the second closed path C2 may not be radiated to the outside of the electronic device 101 or may be reduced.

According to an embodiment of the disclosure, when the electronic device 101 is in the unfolded state, the damper 400 (see FIG. 5) may be spaced apart from the first speaker hole 245. A portion of the sound generated from the speaker 500 may be transferred to the first speaker hole 245 along the first open path O1 and may be radiated to the outside of the electronic device 101. The first open path O1 is a path through which sound generated from the speaker 500 is radiated to the outside of the electronic device 101, and may be referred to as a first sound output path O1.

Consequently, a single speaker 500 may be a sound source in both folded and unfolded states of the electronic device 101 wherein in each of the states there is one open speaker hole configured to output sound of the speaker to the outside.

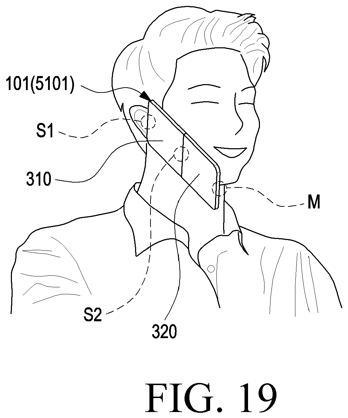

FIG. 19 illustrates an example in which calling is performed in an unfolded state of an electronic device 101 according to an embodiment of the disclosure.

Referring to FIGS. 18 and 19, a portion of the sound generated by the speaker 500 may be transferred to the first sound radiation portion S along the first open path O1 and may be radiated to the outside of the electronic device 101. A portion of the sound generated from the speaker 500 may be transferred to the connection hole 311a along the second closed path C2, but since the connection hole 311a and the second speaker hole 311b are covered by the hinge cover 260, the sound may not be radiated to the outside of the electronic device 101 or may be reduced.

When the electronic device 101 according to an embodiment of the disclosure is in the unfolded state, the first sound radiation portion S1 and the sound detection portion M may be positioned at two opposite edges of the electronic device 101. FIG. 19 is a view illustrating an example in which a first sound radiation portion S1 is positioned close to the user's ear portion, and a sound detection portion M is positioned close to the user's mouth portion.

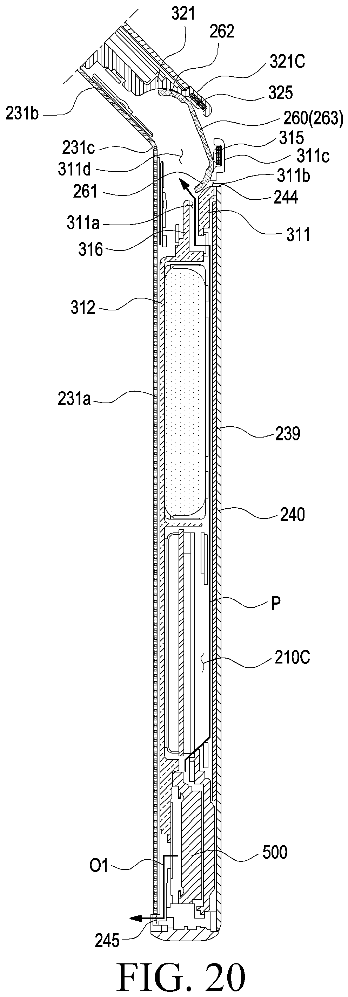

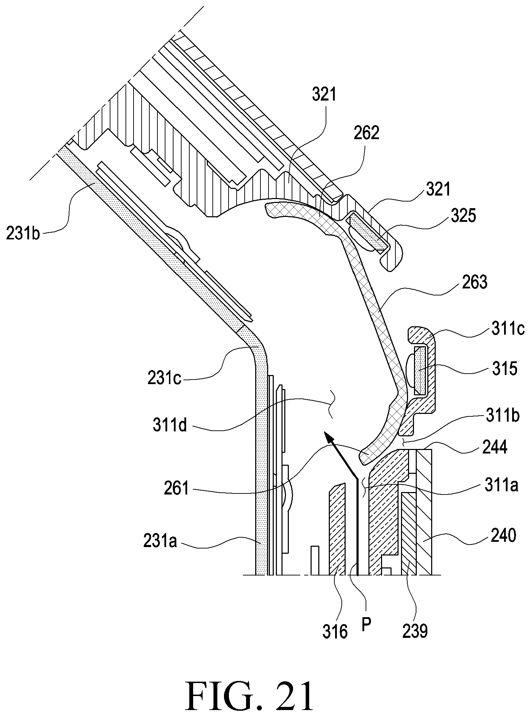

FIG. 20 is a cross-sectional view illustrating an electronic device 101 in a partially folded state (or partially unfolded state) according to an embodiment of the disclosure. FIG. 21 is an enlarged view illustrating a portion of FIG. 20.

Referring to FIGS. 20 and 21, when the electronic device 101 is partially folded, the overlapping portion 311 and one side 261 of the hinge cover 260 may partially overlap each other. For example, when the electronic device 101 is partially folded, one side 261 of the hinge cover 260 may cover the second speaker hole 311b. When the electronic device 101 is partially folded, a portion of the facing surface 311e of the overlapping portion 311 of the first housing 310 may face a portion of the outer surface of one side 261 of the hinge cover 260.

According to an embodiment of the disclosure, when the electronic device 101 is partially folded, a portion of the sound generated by the speaker 500 may be transferred to the second inner space 311d of the overlapping portion 311 of the first housing 310 along the partially closed path P. Even when the connection hole 311a is opened without being covered by the one side 261 of the hinge cover 260, because the second speaker hole 311b is covered by the one side 261 of the hinge cover 260, the sound transferred along the partially closed path P may not be radiated to the outside of the electronic device 101 or may be reduced. The partially closed path P may be referred to as a third closed path P.

According to an embodiment of the disclosure, when the electronic device 101 is partially folded, the damper 400 (see FIG. 5) may be spaced apart from the first speaker hole 245. A portion of the sound generated from the speaker 500 may be transferred to the first speaker hole 245 along the first open path O1 and may be radiated to the outside of the electronic device 101.

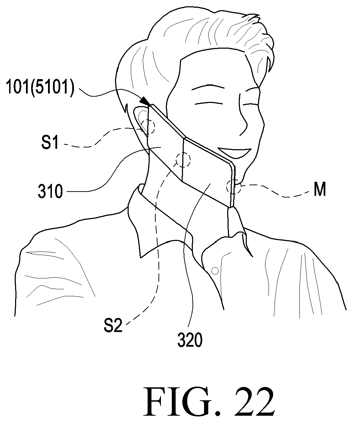

FIG. 22 illustrates an example in which calling is performed in a partially folded state of an electronic device 101 according to an embodiment of the disclosure.

Referring to FIGS. 21 and 22, when the electronic device 101 is partially folded, a portion of the sound generated by the speaker 500 may be transferred to the first sound radiation portion S along the first open path O1 and may be radiated to the outside of the electronic device 101. When the electronic device 101 is partially folded, a portion of the sound generated by the speaker 500 may be transferred to the second inner space 311d of the overlapping portion 311 of the first housing 310 along the partially closed path P, but since the second speaker hole 311b is covered by the hinge cover 260, the second speaker hole 311b may not be radiated to the outside of the electronic device 101 or may be reduced.

When the electronic device 101 according to an embodiment of the disclosure is partially folded, the first sound radiation portion S1 and the sound detection portion M may be positioned at two opposite edges of the electronic device 101. FIG. 22 is a view illustrating an example in which a first sound radiation portion S1 is positioned close to the user's ear portion, and a sound detection portion M is positioned close to the user's mouth portion.

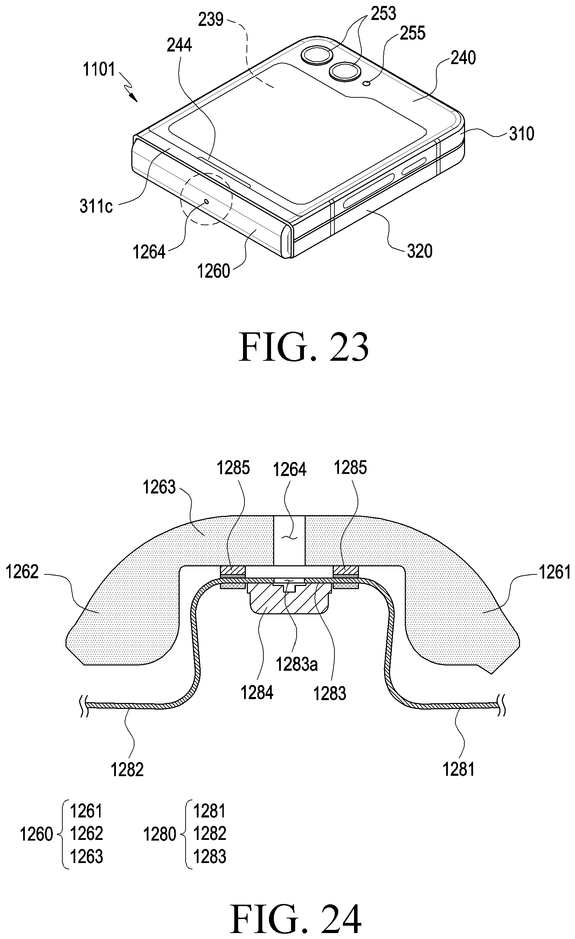

FIG. 23 is a perspective view illustrating an electronic device 1101 in a folded state according to an embodiment of the disclosure. The description of the components (e.g., the electronic device 101 or the hinge cover 260) made with reference to FIGS. 1 to 22 may be equally applied to the components (e.g., the electronic device 1101 or the hinge cover 1260) of the same names illustrated in FIG. 23 unless contradictory.

Referring to FIG. 23, the electronic device 1101 according to an embodiment of the disclosure may include a microphone hole 1264. The microphone hole 1264 may be formed in the hinge cover 1260. In the microphone hole 1264, a sound outside the electronic device 1101 may be introduced into the electronic device 1101 through the microphone hole 1264. The sound introduced into the electronic device 1101 through the microphone hole 1264 may be propagated to the microphone module R (see FIG. 5).

According to an embodiment of the disclosure, at least one microphone hole 1264 may be formed in the hinge cover 1260. The microphone hole 1264 may be positioned near the center of the hinge cover 1260. The outside and the inside of the hinge cover 1260 may be spatially connected to each other through the microphone hole 1264.

FIG. 24 is a cross-sectional view illustrating a portion of an electronic device 1101 according to an embodiment of the disclosure. The description of the components (e.g., the flexible connection member 280 and the hinge cover 260) made with reference to FIGS. 1 to 22 may be equally applied to the components (e.g., the flexible connection member 1280 and the hinge cover 1260) of the same name illustrated in FIG. 24 unless contradictory.

Referring to FIG. 24, the hinge cover 1260 according to an embodiment of the disclosure may include one side 1261 adjacent to the overlapping portion 311 of the first housing 310. The hinge cover 1260 may include one side 1262 adjacent to the overlapping portion 321 of the second housing 320. The hinge cover 1260 may include a central portion 1263 between one side 1261 and the other side 1262.

According to an embodiment of the disclosure, the central portion 1263 may include a microphone hole 1264. The inner surface of the central portion 1263 of the hinge cover 1260 may be recessed toward the outside of the hinge cover 1260. The microphone module 1284 may be disposed in a recessed area of the central portion 1263.

According to an embodiment of the disclosure, the microphone module 1284 may be configured to detect a sound introduced into the hinge cover 1260 through the microphone hole 1264. The microphone module 1284 may be disposed on the flexible connection member 1280.

According to an embodiment of the disclosure, the flexible connection member 1280 may include a first portion 1283 facing a central portion 1263 of the hinge cover 1260. The flexible connection member 1280 may include a second portion 1281 extending from the first portion 1283 toward the inside of the first housing 310. The flexible connection member 1280 may include a third portion 1282 extending from the first portion 1283 toward the inside of the second housing 320.

According to an embodiment of the disclosure, the microphone module 1284 may be disposed in the first portion 1283 of the flexible connection member 1280. As an example, the microphone module 1284 may be connected to a processor (e.g., the processor 120 of FIG. 1) or a battery 215 or 315 (see FIG. 5) through the flexible connection member 1280. The first portion 1283 of the flexible connection member 1280 may include a through hole 1283a. The external sound of the electronic device 1101 may be transferred to the microphone module R by sequentially passing through the microphone hole 1264 and the through hole 1283a.

According to an embodiment of the disclosure, the through hole 1283a formed in the flexible connection member 1280 may be a slot elongated along a length direction of a signal line included in the flexible connection member 1280. For example, the through hole 1283a may be a slot elongated along the length direction (e.g., the Y-axis direction of FIG. 4) of the flexible connection member 1280.

According to an embodiment of the disclosure, the first portion 1283 of the flexible connection member 1280 may be coupled to the inner surface of the central portion 1263 of the hinge cover 1260 through the coupling member 1285. As an example, the coupling member 1285 may be a double-sided tape, and the first portion 1283 of the flexible connection member 1280 may be attached to the inner surface of the central portion 1263 of the hinge cover 1260 through the coupling member 1285.

According to an embodiment of the disclosure, when the electronic device 1101 is in the folded state, the first microphone hole 1264 and the second microphone holes 241 and 243 formed in the hinge cover 1260 are spaced apart from each other, so that sounds detected by the plurality of microphone holes 1264, 241, and 243 may be compared to easily remove background noise detected around the electronic device 1101 during recording or a call.

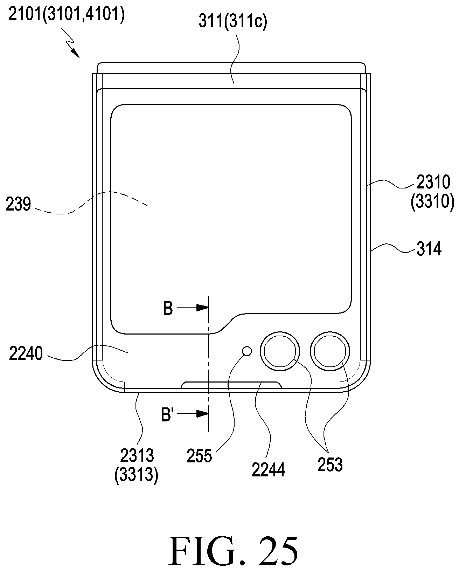

FIG. 25 is a rear view illustrating an electronic device 2101, 3101, and 4101 in a folded state according to an embodiment. FIG. 26 is a cross-sectional view of a portion of the electronic device 2101 taken along line B-B' of FIG. 25.

The description of the components (e.g., the electronic device 101, the second display 239, the camera device 253, the sensor module 255, the first housing 310, the other side 317 of the first housing 310, the first bracket assembly 312, or the first back cover 240) made with reference to FIGS. 2 to 23 may be substantially equally applied to the components (e.g., the electronic device 2101, the second display 239, the camera device 253, the sensor module 255, the first housing 2310, the other side 2317 of the first housing 2310, the first bracket assembly 2312, or the first back cover 240) having the same names, illustrated in FIG. 26, unless contradictory. Referring to FIGS. 25 and 26, the first housing 2310 of the electronic device 2101 according to an embodiment of the disclosure may include a first bracket assembly 2312 and the other side 2317 connected to the first bracket assembly 2312. The speaker 500 may be disposed on the first bracket assembly 2312.

According to an embodiment of the disclosure, the electronic device 2101 may include a back cover 2240. A notch 2244 may be formed in an edge of the back cover 2240 adjacent to the other side 2317 of the first housing 2310. The notch 2244 may be positioned adjacent to the other side 2317 of the first housing 2310. The first speaker hole 245 may be positioned adjacent to the other side 2317 of the first housing 2310. As an example, the notch 2244 and the first speaker hole 245 may be positioned at two opposite points of the first housing 2310.

According to an embodiment of the disclosure, the electronic device 2101 may include a duct structure 2318. The duct structure 2318 may be disposed on the other side 2317 of the first housing 2310. As an example, the duct structure 2318 may be a passage passing through the other side 2317 of the first housing 2310. One side of the duct structure 2318 may support an edge of the back cover 2240. As an example, the duct structure 2318 may be adhered to an edge of the back cover 2240 through an adhesive member.

According to an embodiment of the disclosure, the duct structure 2318 may extend along a direction (e.g., the -Z-axis direction of FIG. 4) from the first decorative cover 218 toward the notch 2244 of the back cover 2240. As an example, the duct structure 2318 may be positioned between the notch 2244 and the first speaker hole 245.

According to an embodiment of the disclosure, a portion of the sound radiated from the diaphragm 520 (see FIG. 7) of the speaker 500 may be transferred to the first speaker hole 245 along the first closed path C1, but may be reflected to the inside of the electronic device 2101 by the damper 400 without being radiated to the outside of the electronic device 2101.

According to an embodiment of the disclosure, the third open path O3 may include a duct structure 2318. A portion of the sound radiated from the diaphragm 520 (see FIG. 7) of the speaker 500 (see FIGS. 7 and 8) may be transferred to the notch 2244 along the third open path O3 to be radiated to the outside of the electronic device 2101. The duct structure 2318 may be spatially connected to the outside of the electronic device 2101 through the notch 2244.

According to an embodiment of the disclosure, the electronic device 2101 may include a cap 560. The cap 560 may partially surround the speaker 500. The cap 560 may contact the pad 553 of the speaker 500. The pad 553 may be configured to be compressed by the cap 560.

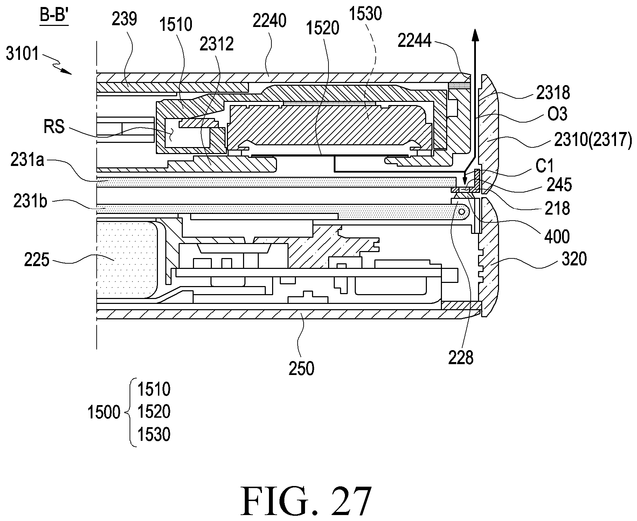

FIG. 27 is a cross-sectional view of a portion of the electronic device 3101 taken along line B-B' of FIG. 25. The description of the components (e.g., the first housing 2310, the back cover 2240, the notch 2244, and the third open path O3) made with reference to FIG. 26 may be applied substantially the same to the components of the same reference numerals illustrated in FIG. 27. The electronic device 3101 illustrated in FIG. 27 is different from the electronic device 2101 illustrated in FIG. 26 in that the speaker module 1500 is disposed rather than the speaker 500.

The description of the components (e.g., the electronic device 101, the second display 239, the first housing 310, the other side 317 of the first housing 310, the first bracket assembly 312, or the first back cover 240) made with reference to FIGS. 2 to 23 may be substantially equally applied to the components (e.g., the electronic device 3101, the second display 239, the first housing 2310, the other side 2317 of the first housing 2310, the first bracket assembly 2312, or the back cover 2240) of the same names illustrated in FIG. 27, unless contradictory.

Referring to FIGS. 25 and 27, the first housing 2310 of the electronic device 2101 according to an embodiment of the disclosure may include a first bracket assembly 2312 and the other side 2317 connected to the first bracket assembly 2312. The speaker module 1500 may be disposed in the first bracket assembly 2312.

The electronic device 3101 according to an embodiment of the disclosure may include a speaker module 1500. The speaker module 1500 may be disposed in the first bracket assembly 2312 of the first housing 2310. The speaker module 1500 may include a vibration generator 1530 (e.g., the vibration generator 530 of FIG. 7) and a diaphragm 1520 (e.g., the diaphragm 520 of FIG. 7). The vibration generator 1530 may include a magnet (not shown) forming a magnetic field and a coil (not shown) configured to be reciprocated by the magnet. The vibration plate 1520 may be vibrated by the vibration generator 1530, and sound may be radiated.

According to an embodiment of the disclosure, the speaker module 1500 may include a resonance housing 1510. The resonance housing 1510 may form a resonance space RS. The sound generated by the vibration generator 1530 of the speaker module 1500 may be resonated in the resonance space RS.

According to an embodiment of the disclosure, a portion of the sound radiated from the diaphragm 1520 of the speaker module 1500 may be transferred to the first speaker hole 245 along the first closed path C1, but may not be radiated to the outside of the electronic device 3101, but may be reflected to the inside of the electronic device 3101 by the damper 400.

According to an embodiment of the disclosure, the third open path O3 may include a duct structure 2318. A portion of the sound radiated from the diaphragm 1520 of the speaker module 1500 may be transferred to the notch 2244 along the third open path O3 and may be radiated to the outside of the electronic device 3101. The duct structure 2318 may be spatially connected to the outside of the electronic device 3101 through the notch 2244.

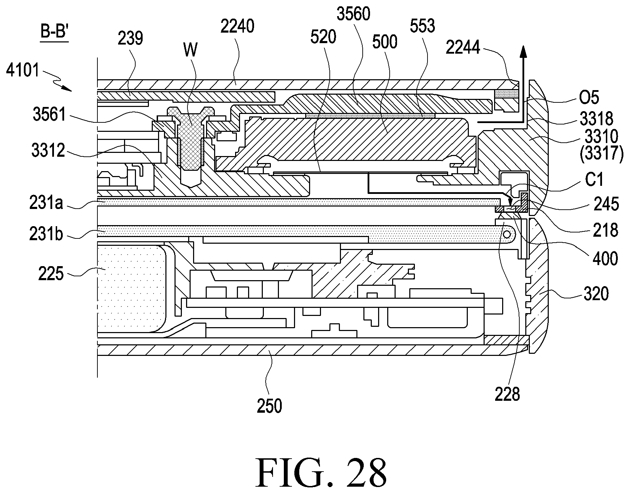

FIG. 28 is a cross-sectional view of a portion of the electronic device 4101 taken along line B-B' of FIG. 25.

The description of the components (e.g., the electronic device 101, the second display 239, the first housing 310, the other side 317 of the first housing 310, the first bracket assembly 312, or the first back cover 240) made with reference to FIGS. 2 to 23 may be substantially equally applied to the components (e.g., the electronic device 4101, the second display 239, the first housing 3310, the one side 3317 of the first housing 3310, the first bracket assembly 3312, or the back cover 2240) of the same names illustrated in FIG. 28, unless contradictory.

Referring to FIGS. 25 and 28, the first housing 3310 of the electronic device 4101 according to an embodiment of the disclosure may include a first bracket assembly 3312 and the other side 3317 connected to the first bracket assembly 2312. The speaker 500 may be disposed on the first bracket assembly 3312.

According to an embodiment of the disclosure, the electronic device 4101 may include a back cover 2240. A notch 2244 may be formed in an edge of the back cover 2240 adjacent to the other side 3317 of the first housing 3310. The notch 2244 may be positioned adjacent to the other side 3317 of the first housing 3310. The first speaker hole 245 may be positioned adjacent to the other side 3317 of the first housing 3310. As an example, the notch 2244 and the first speaker hole 245 may be positioned at two opposite points of the first housing 3310.

According to an embodiment of the disclosure, the electronic device 4101 may include a duct structure 3318. Through the duct structure 3318, the sound radiated through the vent portions 551 and 552 (see FIG. 8) of the speaker 500 may be transferred to the notch 2244. As an example, the duct structure 3318 may be a portion of the other side 3317 of the first housing 3310. As another example, the duct structure 3318 may be formed by the other side 3317 and the cap 3560 of the first housing 3310. According to an embodiment of the disclosure, the sound radiated from the vent portions 551 and 552 (see FIG. 8) of the speaker 500 and the sound radiated from the diaphragm 520 (see FIG. 7) of the speaker 500 may not overlap. As an example, a space (e.g., the first closed path C1) in which the sound radiated from the diaphragm 520 of the speaker 500 is propagated and a space (e.g., the fifth open path O5) in which the sound radiated through the vent portions 551 and 552 is propagated may be spatially separated by the other side 3317 of the first housing 3310.

According to an embodiment of the disclosure, the electronic device 4101 may include a cap 3560. The cap 3560 may partially surround the speaker 500. The cap 3560 may contact the pad 553 of the speaker 500. The pad 553 may be configured to be compressed by the cap 560.

According to an embodiment of the disclosure, the cap 3560 may include a coupling portion 3561 coupled to the first bracket assembly 3312. The coupling portion 3561 of the cap 3560 may be coupled to the first bracket assembly 3312 through the fastening member W. As the coupling portion 3561 is fastened by the fastening member W, the cap 3560 may be in tight contact with the pad 553 of the speaker 500. As the coupling portion 3561 is fastened by the fastening member W, the spatial connection between the peripheral spaces of the vent portions 551 and 552 and the inner space (e.g., the first inner space 210c of FIG. 5) of the electronic device 4101 may be blocked. Accordingly, the sound radiated through the vent portions 551 and 552 may be concentrated in the duct structure 3318.

According to an embodiment of the disclosure, the sound radiated through the vent portions 551, 552, and 8 of the speaker 500 may be transferred to the notch 2244 along the fifth open path O5 and may be radiated to the outside of the electronic device 4101. The fifth open path O5 may include a duct structure 3318. The duct structure 3318 of the first housing 3310 and the outer space of the electronic device 4101 may be spatially connected to each other through the notch 2244.

According to an embodiment of the disclosure, a portion of the sound radiated from the diaphragm 520 (see FIG. 7) of the speaker 500 may be transferred to the first speaker hole 245 along the first closed path C1, but may be reflected into the inside of the electronic device 4101 without being radiated to the outside of the electronic device 4101 by the damper 400.

In the case of a foldable electronic device that is folded or unfolded about a predetermined axis, the positions of electronic components (e.g., a speaker, a microphone, etc.) of the electronic device may vary depending on the degree of folding. Accordingly, in states that may be defined according to the degree of folding of the electronic device, many studies have been conducted for exerting and/or enhancing the functions (e.g., sound radiation, sound detection, or call) of the electronic components.

An object of the disclosure may allow the sound output from an electronic device to be radiated in other portions of the electronic device in the unfolded state and folded state of the electronic device.

An object of the disclosure may make it possible to make a call when an electronic device is in the folded state and unfolded state.

According to various embodiments of the disclosure, it is possible to enhance the volume and sound quality when the electronic device is in the folded state by forming a sound path open to the outside of the electronic device when the electronic device is in the folded state.

According to various embodiments of the disclosure, as the sound path which is opened when the electronic device is in the folded state is covered when the electronic device is unfolded, it is possible to minimize the deterioration of call quality when the electronic device is in the unfolded state. Further, by selectively opening one speaker hole and closing the other speaker hole depending on the folded/unfolded state of the device, sound is directed only in the required sound path and is blocked in the other sound path, which controls sound leakage and improves sound quality and directionality.

Effects obtainable from the disclosure are not limited to the above-mentioned effects, and other effects not mentioned may be clearly understood by those skilled in the art from the following description.

According to an embodiment of the disclosure, an electronic device 101 comprises a foldable housing 310, 320 including a first housing 310 and a second housing 320.

According to an embodiment of the disclosure, the electronic device 101 may comprise a hinge structure 270 providing a folding axis A of the foldable housing 310, 320.

According to an embodiment of the disclosure, in the hinge structure 270, the first housing 310 and the second housing 320 may be coupled to rotate about the folding axis A.

According to an embodiment of the disclosure, the electronic device 101 may include a hinge cover 260, 1260 configured to be partially received in the foldable housing 310, 320.

According to an embodiment of the disclosure, the electronic device 101 may comprise a speaker 500 disposed in a first inner space 210c of the first housing 310.

According to an embodiment of the disclosure, the first housing 310 may include a side wall 314 surrounding at least a portion of the first inner space 210c.

According to an embodiment of the disclosure, the side wall 314 may include a first portion 311 configured to overlap the hinge cover 260, 1260.

According to an embodiment of the disclosure, the first housing 310 may include a connection hole 311a positioned in the first portion 311.

According to an embodiment of the disclosure, the connection hole 311a may communicate the first inner space 210c with a second inner space 311d of the first portion 311.

According to an embodiment of the disclosure, the first housing 310 may include a second speaker hole 311b positioned in the first portion 311.

According to an embodiment of the disclosure, the second speaker hole 311b may communicate the outside of the electronic device 101 with the second inner space 311d of the first portion 311.

According to an embodiment of the disclosure, when the foldable housing 310 or 320 is folded so that the first housing 310 and the second housing 320 face each other, the connection hole 311a and the second speaker hole 311b may be opened.

According to an embodiment of the disclosure, the connection hole 311a may be spaced apart from the second speaker hole 311b along a direction in which the first housing 310 is folded with respect to the folding axis A.

According to an embodiment of the disclosure, when the foldable housing 310 or 320 is partially folded so that the first housing 310 is inclined with respect to the second housing 320, the second speaker hole 311b may overlap the hinge cover 260 or 1260, and the connection hole 311a may be opened.

According to an embodiment of the disclosure, an outer surface of the first portion 311, where the connection hole 311a and the second speaker hole 311b are positioned, and an outer surface of the hinge cover 260 or 1260 received in the first housing 310 may be adjacent to each other.

According to an embodiment of the disclosure, the outer surface of the first portion 311 may be formed to correspond to a portion of the outer surface of the hinge cover 260.

According to an embodiment of the disclosure, the electronic device 101 may include a first display 230 including a first area 231a supported by the first housing 310, a second area 231b supported by the second housing 320, and a folding area 231c disposed between the first area 231a and the second area 231b.

According to an embodiment of the disclosure, the electronic device 101 may include a second display 239 facing the first display 230 on the first housing 310.

According to an embodiment of the disclosure, the second speaker hole 311b may be positioned around the second display 239.

According to an embodiment of the disclosure, a back cover 240 covering the second display 239 may be included.

According to an embodiment of the disclosure, the back cover 240 may have an edge supported by the side wall 314 of the first housing 310.

According to an embodiment of the disclosure, the back cover 240 may have a notch 244 formed in an edge corresponding to the second speaker hole 311b.

According to an embodiment of the disclosure, a pair of connection holes 311a may be provided, and may be positioned to be symmetrical to each other with respect to the center of the notch 244.

According to an embodiment of the disclosure, the electronic device may further include a duct 316 extending from a boundary of the connection hole 311a toward the first inner space 210c.

According to an embodiment of the disclosure, the duct 316 may be opened into the first inner space 210c.

According to an embodiment of the disclosure, the electronic device 101 may include a sealer 315 disposed at the edge 311c of the first portion 311.

According to an embodiment of the disclosure, the sealer 315 may seal between the edge 311c of the first portion 311 and the hinge cover 260.

According to an embodiment of the disclosure, the second speaker hole 311b may be spaced apart from the sealer 315 toward the connection hole 311a.

According to an embodiment of the disclosure, the second speaker hole 311b may be positioned between the sealer 315 and the connection hole 311a in a rotation direction of the first housing 310 with respect to the folding axis A.

According to an embodiment of the disclosure, the electronic device 1101 may include a flexible connection member 1280 extending from the inside of the first housing 310 to the inside of the second housing 320 through the inside of the hinge cover 260.

According to an embodiment of the disclosure, the electronic device 1101 may include a first microphone module 1284 disposed on the flexible connection member 1280 and positioned inside the hinge cover 1260.

According to an embodiment of the disclosure, the electronic device 1101 may include a microphone hole 1264 formed in the hinge cover 1260.

According to an embodiment of the disclosure, the flexible connection member 1280 may include a through hole 1283a positioned between the microphone hole 1264 and the first microphone module 1284.

According to an embodiment of the disclosure, the electronic device 101 may include a second microphone module R disposed inside the second housing 320.

According to an embodiment of the disclosure, the electronic device 101 may include a microphone hole 243 formed in an edge of the second housing 320 facing the hinge cover 260.

According to an embodiment of the disclosure, the electronic device 2101 may include a foldable housing 2310 and 320 including a first housing 2310 and a second housing 320.

According to an embodiment of the disclosure, the electronic device 2101 may include a hinge structure 270 to which the first housing 2310 and the second housing 320 are coupled so as to be rotated about the folding axis A.

According to an embodiment of the disclosure, the electronic device 2101 may include a speaker 500 disposed inside the first housing 2310.

According to an embodiment of the disclosure, the electronic device 2101 may include a back cover 2240 forming the first surface of the electronic device 2101.

According to an embodiment of the disclosure, the back cover 2240 may include, in an edge thereof, a notch 2244 configured to communicate the outside of the electronic device 2101 with the inside of the first housing 2310.

According to an embodiment of the disclosure, the electronic device 2101 may include a first speaker hole 245 facing the notch 2244 with respect to the first housing 2310.

According to an embodiment of the disclosure, the first speaker hole 245 may communicate the inner space of the first housing 2310 with the outside of the electronic device 2101.

According to an embodiment of the disclosure, the electronic device 2101 may include a damper 400 disposed at an edge of the second housing 320.

According to an embodiment of the disclosure, the damper 400 may be configured to overlap the first speaker hole 245 when the foldable housing 2310 and 320 is folded.

According to an embodiment of the disclosure, the damper 400 may be formed to correspond to the shape of the first speaker hole 245.

According to an embodiment of the disclosure, the electronic device 2101 may include a first display 230 including a first area 231a supported by the first housing 2310, a second area 231b supported by the second housing 320, and a folding area 231c disposed between the first area 231a and the second area 231b.

According to an embodiment of the disclosure, the electronic device 2101 may include a second display 239 facing the first display 230 on the first housing 2310.

According to an embodiment of the disclosure, the notch 2244 may be positioned around the second display 239.

According to an embodiment of the disclosure, the electronic device 101 may include a foldable housing 260, 310, and 320 including a first housing 310, a second housing 320, and a hinge cover 260 disposed between the first housing 310 and the second housing 320.

According to an embodiment of the disclosure, when the foldable housing 260, 310, and 320 is unfolded, the first surface of the first housing 310 and the second surface of the second housing 320 may face in the same direction.

According to an embodiment of the disclosure, the first surface and the second surface may be configured to face each other when the foldable housing 260, 310, or 320 is fully folded.

According to an embodiment of the disclosure, the electronic device 101 may include a hinge structure 270 at least partially received in the hinge cover 260 and connected to the first housing 310 and the second housing 320.

According to an embodiment of the disclosure, the electronic device 101 may include a flexible display 230 received across the first housing 310, the hinge cover 260, and the second housing 320 to be visible in the same direction.

According to an embodiment of the disclosure, the electronic device 101 may include a speaker 500 received in the first housing 310.

According to an embodiment of the disclosure, the first housing 310 may include a first speaker hole 245 and a second speaker hole 311b connected to the speaker 500 through a spatial path O4 so that sound output from the speaker 500 is passed to the outside of the electronic device.

According to an embodiment of the disclosure, the first speaker hole 245 may be formed on the first surface adjacent to the first side 317 of the first housing opposite to the hinge cover 260 to be at least partially shielded when the foldable housing 260, 310, or 320 is fully folded.

According to an embodiment of the disclosure, the second speaker hole 311b may be formed in a third surface opposite to the first surface, adjacent to the second side 311 of the first housing 310 facing the hinge cover 260 so as to be at least partially shielded when the foldable housing 260, 310, or 320 is unfolded.

According to an embodiment of the disclosure, the electronic device 101 may include a damper 400 disposed on a third side of the second housing 320 opposite to the hinge cover 260 to at least partially shield the first speaker hole 245 between the first speaker hole 245 and the second housing 320 when the foldable housing 260, 310, and 320 is fully folded.

According to an embodiment of the disclosure, the second speaker hole 311b may be configured to be at least partially shielded by the hinge cover 260 when the foldable housing 260, 310, or 320 is unfolded.

According to an embodiment of the disclosure, the second speaker hole 311b may be configured not to be shielded by the hinge cover 260 when the foldable housing 260, 310, or 320 is folded.

According to an embodiment of the disclosure, the first housing 310 may include a first duct at least partially formed between the speaker 500 and the flexible display 230 to guide the sound to the first speaker hole 245.

According to an embodiment of the disclosure, the first housing 310 may include a second duct 316 at least partially formed between the speaker 500 and the third surface of the first housing to guide the sound to the second speaker hole 311b.

According to an embodiment of the disclosure, the first surface 520 of the speaker 500 may be spatially connected to the first speaker hole 245.

According to an embodiment of the disclosure, the second surface 551 and 552 of the speaker 500 may be spatially connected to the second speaker hole 311b.

According to an embodiment of the disclosure, the first housing 2310 may include a third speaker hole 2318 formed in the third surface and spatially connected to the speaker 500 and the first speaker hole 245.

According to an embodiment of the disclosure, the electronic device 1101 may include a microphone module 1284 at least partially received in the hinge cover 1260.

According to an embodiment of the disclosure, the hinge cover 1260 may include a microphone hole 1264.

According to an embodiment of the disclosure, the microphone module 1284 may be configured to receive sound from the outside of the electronic device through the microphone hole 1264.

## Claims

1. An electronic device, comprising:
a first housing (310);
a second housing (320);
a hinge structure (270) connected to the first housing (310) and the second housing (320) and configured to rotate the first housing (310) and the second housing (320);
a hinge cover (260) covering at least a portion of the hinge structure (270);
a flexible display (230) disposed at the first housing (310) and the second housing (320);
a speaker (500) disposed at the first housing (310);
a first sound output path (O1) configured to be open when the first housing (310) and the second housing (320) are in an unfolded state and **characterized in**
comprising a first speaker hole (245) configured to be at least partially covered when the first housing (310) and the second housing (320) are in a folded state, wherein the first speaker hole (245) in an open state is configured to pass a sound output from the speaker (500) to an outside of the electronic device; and
a second sound output path (O2) configured to be open when the first housing (310) and the second housing (320) are in the folded state and comprising a second speaker hole (311b) configured to be at least partially covered when the first housing (310) and the second housing (320) are in the unfolded state, wherein the second speaker hole (311b) in an open state is configured to pass a sound output from the speaker (500) to the outside of the electronic device,
wherein the second speaker hole (311b) is disposed in the first housing (310).

2. The electronic device of claim 1,
wherein the second speaker hole (311b) is disposed in a portion (311) of the first housing (310) adjacent to the hinge structure (270), and
wherein the first speaker hole (245) is disposed around a portion (231a) of the flexible display (230) disposed at the first housing (310).

3. The electronic device of claim 1 or 2, wherein the hinge cover (260) includes an extending portion (261) configured to at least partially cover the second speaker hole (311b) when the first housing (310) and the second housing (320) are in the unfolded state.

4. The electronic device of claim 3,
wherein the first housing (310) comprises a facing surface (311e) configured to face the extending portion (261) when the first housing (310) and the second housing (320) are in the unfolded state, and
wherein the second speaker hole (311b) is disposed at the facing surface (311e).

5. The electronic device of claim 4,
wherein the second sound output path (O2) comprises:
a connection hole (311a) disposed in the facing surface (311e) and spaced toward the flexible display (230) from the second speaker hole (311b), and
wherein the connection hole (311a) and the speaker hole (311b) are opened when the first housing (310) and the second housing (320) are in the folded state.

6. The electronic device of claim 5,
wherein the connection hole (311a) is spaced apart from the second speaker hole (311b) along a folding direction of the first housing (310).

7. The electronic device of claim 5,
wherein the connection hole (311a) is at least partially covered by the extending portion (261) of the hinge cover (260), when the first housing (310) and the second housing (320) are in the unfolded state.

8. The electronic device of any one of claims 1 to 7, further comprising a back cover (240) opposite to a portion (231a) of the flexible display (230), wherein an edge of the back cover (240) is supported by the first housing (310), and
wherein the second speaker hole (311b) is positioned around the back cover (240).

9. The electronic device of any claim 5, further comprising a back cover (240) opposite to a portion (231a) of the flexible display (230), wherein an edge of the back cover (240) is supported by the first housing (310),
wherein the back cover (240) comprises a notch (244) formed at the edge, corresponding to the second speaker hole (311b), of the back cover (240).

10. The electronic device of claim 9, further comprising a display (239) covered by the back cover (240),
wherein the connection hole (311a) is positioned below the display (239) and the notch (244) is disposed around the display (239).

11. The electronic device of claim 5,
wherein the first housing (310) comprises:
a side wall (314) defining an inner space (210c); and
an overlapping portion (311) protruding from the side wall (314) and including the facing surface (311e), and
wherein the second sound output path (O2) comprises a duct (316) positioned in the overlapping portion (311) and comprising the connection hole (311a) formed at an end of the duct (316).

12. The electronic device of claim 11, further comprising a sealer (315) disposed at an edge (311c) of the overlapping portion (311) and sealing between the edge (311c) of the overlapping portion (311) and the hinge cover (260),
wherein the second speaker hole (311b) is spaced apart from the sealer (315) toward the connection hole (311a).

13. The electronic device of claim 12,
wherein the second speaker hole (311b) is positioned between the sealer (315) and the connection hole (311a) in a rotational direction of the first housing (310) with respect to the hinge structure (270).

14. The electronic device of any one of claims 1 to 13, further comprising:
a flexible connection member (1280) extending from an inside of the first housing (310) to an inside of the second housing (320) through an inside of the hinge cover (1260);
a first microphone module (1284) disposed on the flexible connection member (1280) and positioned inside the hinge cover (1260); and
a first microphone hole (1264) formed at the hinge cover (1260).

15. The electronic device of claim 14,
wherein the flexible connection member (1280) comprises a penetration hole (1283a) disposed between the first microphone module (1284) and the first microphone hole (1264).

## Patentansprüche

1. Elektronische Vorrichtung, umfassend:
ein erstes Gehäuse (310);
ein zweites Gehäuse (320);
eine Scharnierstruktur (270), die mit dem ersten Gehäuse (310) und dem zweiten Gehäuse (320) verbunden ist und dazu konfiguriert ist, das erste Gehäuse (310) und das zweite Gehäuse (320) zu drehen;
eine Scharnierabdeckung (260), die mindestens einen Abschnitt der Scharnierstruktur (270) abdeckt;
eine flexible Anzeige (230), die an dem ersten Gehäuse (310) und dem zweiten Gehäuse (320) angeordnet ist;
einen Lautsprecher (500), der an dem ersten Gehäuse (310) angeordnet ist;
einen ersten Tonausgabeweg (O1), der dazu konfiguriert ist, offen zu sein, wenn sich das erste Gehäuse (310) und das zweite Gehäuse (320) in einem auseinandergefalteten Zustand befinden, und der **dadurch gekennzeichnet ist, dass** er eine erste Lautsprecheröffnung (245) umfasst, die dazu konfiguriert ist, zumindest teilweise abgedeckt zu sein, wenn sich das erste Gehäuse (310) und das zweite Gehäuse (320) in einem gefalteten Zustand befinden, wobei die erste Lautsprecheröffnung (245) in einem offenen Zustand dazu konfiguriert ist, eine Tonausgabe von dem Lautsprecher (500) zu einer Außenseite der elektronischen Vorrichtung zu leiten; und
einen zweiten Tonausgabeweg (O2), der dazu konfiguriert ist, offen zu sein, wenn sich das erste Gehäuse (310) und das zweite Gehäuse (320) in dem gefalteten Zustand befinden, und der eine zweite Lautsprecheröffnung (311b) umfasst, die dazu konfiguriert ist, zumindest teilweise abgedeckt zu sein, wenn sich das erste Gehäuse (310) und das zweite Gehäuse (320) in dem auseinandergefalteten Zustand befinden, wobei die zweite Lautsprecheröffnung (311b) in einem offenen Zustand dazu konfiguriert ist, eine Tonausgabe von dem Lautsprecher (500) zu der Außenseite der elektronischen Vorrichtung zu leiten,
wobei die zweite Lautsprecheröffnung (311b) in dem ersten Gehäuse (310) angeordnet ist.

2. Elektronische Vorrichtung nach Anspruch 1,
wobei die zweite Lautsprecheröffnung (311b) in einem Abschnitt (311) des ersten Gehäuses (310) angeordnet ist, der an die Scharnierstruktur (270) angrenzt, und
wobei die erste Lautsprecheröffnung (245) um einen Abschnitt (231a) der flexiblen Anzeige (230) herum angeordnet ist, der an dem ersten Gehäuse (310) angeordnet ist.

3. Elektronische Vorrichtung nach Anspruch 1 oder 2, wobei die Scharnierabdeckung (260) einen Erweiterungsabschnitt (261) umfasst, der dazu konfiguriert ist, die zweite Lautsprecheröffnung (311b) zumindest teilweise abzudecken, wenn sich das erste Gehäuse (310) und das zweite Gehäuse (320) in dem auseinandergefalteten Zustand befinden.

4. Elektronische Vorrichtung nach Anspruch 3,
wobei das erste Gehäuse (310) eine zugewandte Fläche (311e) umfasst, die dazu konfiguriert ist, dem Erweiterungsabschnitt (261) zugewandt zu sein, wenn sich das erste Gehäuse (310) und das zweite Gehäuse (320) in dem auseinandergefalteten Zustand befinden, und
wobei die zweite Lautsprecheröffnung (311b) an der zugewandten Fläche (311e) angeordnet ist.

5. Elektronische Vorrichtung nach Anspruch 4,
wobei der zweite Tonausgabeweg (O2) Folgendes umfasst:
eine Verbindungsöffnung (311a), die in der zugewandten Fläche (311e) angeordnet ist und in Richtung der flexiblen Anzeige (230) von der zweiten Lautsprecheröffnung (311b) beabstandet ist, und
wobei die Verbindungsöffnung (311a) und die Lautsprecheröffnung (311b) geöffnet sind, wenn sich das erste Gehäuse (310) und das zweite Gehäuse (320) in dem gefalteten Zustand befinden.

6. Elektronische Vorrichtung nach Anspruch 5,
wobei die Verbindungsöffnung (311a) entlang einer Faltrichtung des ersten Gehäuses (310) von der zweiten Lautsprecheröffnung (311b) beabstandet ist.

7. Elektronische Vorrichtung nach Anspruch 5,
wobei die Verbindungsöffnung (311a) zumindest teilweise durch den Erweiterungsabschnitt (261) der Scharnierabdeckung (260) abgedeckt ist, wenn sich das erste Gehäuse (310) und das zweite Gehäuse (320) in dem auseinandergefalteten Zustand befinden.

8. Elektronische Vorrichtung nach einem der Ansprüche 1 bis 7, die ferner eine Rückabdeckung (240) umfasst, die einem Abschnitt (231a) der flexiblen Anzeige (230) gegenüberliegt, wobei eine Kante der Rückabdeckung (240) von dem ersten Gehäuse (310) gestützt wird, und
wobei die zweite Lautsprecheröffnung (311b) um die Rückabdeckung (240) herum positioniert ist.

9. Elektronische Vorrichtung nach einem Anspruch 5, die ferner eine Rückabdeckung (240) umfasst, die einem Abschnitt (231a) der flexiblen Anzeige (230) gegenüberliegt, wobei eine Kante der Rückabdeckung (240) durch das erste Gehäuse (310) gestützt wird,
wobei die Rückabdeckung (240) eine Aussparung (244) umfasst, die an der Kante der Rückabdeckung (240), die der zweiten Lautsprecheröffnung (311b) entspricht, ausgebildet ist.

10. Elektronische Vorrichtung nach Anspruch 9, die ferner eine Anzeige (239) umfasst, die von der Rückabdeckung (240) abgedeckt wird,
wobei die Verbindungsöffnung (311a) unterhalb der Anzeige (239) positioniert ist und die Aussparung (244) um die Anzeige (239) herum angeordnet ist.

11. Elektronische Vorrichtung nach Anspruch 5,
wobei das erste Gehäuse (310) Folgendes umfasst:
eine Seitenwand (314), die einen Innenraum (210c) definiert; und
einen überlappenden Abschnitt (311), der von der Seitenwand (314) hervorsteht und die zugewandte Fläche (311e) beinhaltet, und
wobei der zweite Tonausgabeweg (O2) einen Kanal (316) umfasst, der in dem Überlappungsabschnitt (311) positioniert ist und die an einem Ende des Kanals (316) ausgebildete Verbindungsöffnung (311a) umfasst.

12. Elektronische Vorrichtung nach Anspruch 11, die ferner eine Dichtung (315) umfasst, die an einer Kante (311c) des überlappenden Abschnitts (311) angeordnet ist und zwischen der Kante (311c) des überlappenden Abschnitts (311) und der Scharnierabdeckung (260) abdichtet,
wobei die zweite Lautsprecheröffnung (311b) in Richtung der Verbindungsöffnung (311a) von der Dichtung (315) beabstandet ist.

13. Elektronische Vorrichtung nach Anspruch 12,
wobei die zweite Lautsprecheröffnung (311b) in einer Drehrichtung des ersten Gehäuses (310) in Bezug auf die Scharnierstruktur (270) zwischen der Dichtung (315) und der Verbindungsöffnung (311a) positioniert ist.

14. Elektronische Vorrichtung nach einem der Ansprüche 1 bis 13, ferner umfassend:
ein flexibles Verbindungselement (1280), das sich von einer Innenseite des ersten Gehäuses (310) durch eine Innenseite der Scharnierabdeckung (1260) hindurch zu einer Innenseite des zweiten Gehäuses (320) erstreckt;
ein erstes Mikrofonmodul (1284), das an dem flexiblen Verbindungselement (1280) angeordnet und innerhalb der Scharnierabdeckung (1260) positioniert ist; und
eine erste Mikrofonöffnung (1264), die an der Scharnierabdeckung (1260) ausgebildet ist.

15. Elektronische Vorrichtung nach Anspruch 14,
wobei das flexible Verbindungselement (1280) eine Durchgangsöffnung (1283a) umfasst, die zwischen dem ersten Mikrofonmodul (1284) und der ersten Mikrofonöffnung (1264) angeordnet ist.

## Revendications

1. Dispositif électronique comprenant :
un premier boîtier (310) ;
un deuxième boîtier (320) ;
une structure de charnière (270) reliée au premier boîtier (310) et au deuxième boîtier (320) et configurée pour faire tourner le premier boîtier (310) et le deuxième boîtier (320) ;
un couvercle de charnière (260) recouvrant au moins une partie de la structure de charnière (270) ;
un affichage flexible (230) disposé au niveau du premier boîtier (310) et du deuxième boîtier (320) ;
un haut-parleur (500) disposé au niveau du premier boîtier (310) ;
un premier chemin de sortie de son (O1) configuré pour être ouvert lorsque le premier boîtier (310) et le deuxième boîtier (320) sont à l'état déplié, et **caractérisé en ce qu'**il
comprend un premier trou de haut-parleur (245) configuré pour être au moins partiellement recouvert lorsque le premier boîtier (310) et le deuxième boîtier (320) sont à l'état replié, dans lequel le premier trou de haut-parleur (245), à l'état ouvert, est configuré pour faire passer un son émis par le haut-parleur (500) vers l'extérieur du dispositif électronique ; et
un deuxième chemin de sortie de son (O2) configuré pour être ouvert lorsque le premier boîtier (310) et le deuxième boîtier (320) sont à l'état replié et comprenant un deuxième trou de haut-parleur (311b) configuré pour être au moins partiellement recouvert lorsque le premier boîtier (310) et le deuxième boîtier (320) sont à l'état déplié, dans lequel le deuxième trou de haut-parleur (311b), à l'état ouvert, est configuré pour faire passer un son émis par le haut-parleur (500) vers l'extérieur du dispositif électronique,
dans lequel le deuxième trou de haut-parleur (311b) est disposé dans le premier boîtier (310).

2. Dispositif électronique de la revendication 1,
dans lequel le deuxième trou de haut-parleur (311b) est disposé dans une partie (311) du premier boîtier (310) adjacente à la structure de charnière (270), et
dans lequel le premier trou de haut-parleur (245) est disposé autour d'une partie (231a) de l'affichage flexible (230) disposée au niveau du premier boîtier (310).

3. Dispositif électronique de la revendication 1 ou 2, dans lequel le couvercle de charnière (260) comprend une partie d'extension (261) configurée pour recouvrir au moins partiellement le deuxième trou de haut-parleur (311b) lorsque le premier boîtier (310) et le deuxième boîtier (320) sont à l'état déplié.

4. Dispositif électronique de la revendication 3,
dans lequel le premier boîtier (310) comprend une surface faisant face (311e) configurée pour faire face à la partie d'extension (261) lorsque le premier boîtier (310) et le deuxième boîtier (320) sont à l'état déplié, et
dans lequel le deuxième trou de haut-parleur (311b) est disposé au niveau de la surface faisant face (311e).

5. Dispositif électronique de la revendication 4,
dans lequel le deuxième chemin de sortie de son (O2) comprend :
un trou de connexion (311a) disposé dans la surface faisant face (311e) et espacé du deuxième trou de haut-parleur (311b) en direction de l'affichage flexible (230), et
dans lequel le trou de connexion (311a) et le trou de haut-parleur (311b) sont ouverts lorsque le premier boîtier (310) et le deuxième boîtier (320) sont à l'état replié.

6. Dispositif électronique de la revendication 5,
dans lequel le trou de connexion (311a) est espacé du deuxième trou de haut-parleur (311b) le long d'une direction de pliage du premier boîtier (310).

7. Dispositif électronique de la revendication 5,
dans lequel le trou de connexion (311a) est au moins partiellement recouvert par la partie d'extension (261) du couvercle de charnière (260), lorsque le premier boîtier (310) et le deuxième boîtier (320) sont à l'état déplié.

8. Dispositif électronique de l'une quelconque des revendications 1 à 7, comprenant en outre un couvercle arrière (240) opposé à une partie (231a) de l'affichage flexible (230), dans lequel un bord du couvercle arrière (240) est supporté par le premier boîtier (310), et
dans lequel le deuxième trou de haut-parleur (311b) est positionné autour du couvercle arrière (240).

9. Dispositif électronique de la revendication 5, comprenant en outre un couvercle arrière (240) opposé à une partie (231a) de l'affichage flexible (230), dans lequel un bord du couvercle arrière (240) est supporté par le premier boîtier (310),
dans lequel le couvercle arrière (240) comprend une encoche (244) formée au niveau du bord, correspondant au deuxième trou de haut-parleur (311b), du couvercle arrière (240).

10. Dispositif électronique de la revendication 9, comprenant en outre un affichage (239) recouvert par le couvercle arrière (240),
dans lequel le trou de connexion (311a) est positionné sous l'affichage (239) et l'encoche (244) est disposée autour de l'affichage (239).

11. Dispositif électronique de la revendication 5,
dans lequel le premier boîtier (310) comprend :
une paroi latérale (314) définissant un espace intérieur (210c) ; et
une partie de chevauchement (311) faisant saillie depuis la paroi latérale (314) et comprenant la surface faisant face (311e), et
dans lequel le deuxième chemin de sortie de son (O2) comprend un conduit (316) positionné dans la partie de chevauchement (311) et comprenant le trou de connexion (311a) formé à une extrémité du conduit (316).

12. Dispositif électronique de la revendication 11, comprenant en outre un élément d'étanchéité (315) disposé au niveau d'un bord (311c) de la partie de chevauchement (311) et assurant l'étanchéité entre le bord (311c) de la partie de chevauchement (311) et le couvercle de charnière (260),
dans lequel le deuxième trou de haut-parleur (311b) est espacé de l'élément d'étanchéité (315) en direction du trou de connexion (311a).

13. Dispositif électronique de la revendication 12,
dans lequel le deuxième trou de haut-parleur (311b) est positionné entre l'élément d'étanchéité (315) et le trou de connexion (311a) dans une direction de rotation du premier boîtier (310) par rapport à la structure de charnière (270).

14. Dispositif électronique de l'une quelconque des revendications 1 à 13, comprenant en outre :
un élément de connexion flexible (1280) s'étendant depuis l'intérieur du premier boîtier (310) jusqu'à l'intérieur du deuxième boîtier (320) en passant par l'intérieur du couvercle de charnière (1260) ;
un premier module de microphone (1284) disposé sur l'élément de connexion flexible (1280) et positionné à l'intérieur du couvercle de charnière (1260) ; et
un premier trou de microphone (1264) formé au niveau du couvercle de charnière (1260).

15. Dispositif électronique de la revendication 14,
dans lequel l'élément de connexion flexible (1280) comprend un trou de pénétration (1283a) disposé entre le premier module de microphone (1284) et le premier trou de microphone (1264).
